(19) **Europäisches Patentamt** / **European Patent Office** / **Office européen des brevets**

(11) **EP 4 497 646 B1**

(12) **EUROPEAN PATENT SPECIFICATION**

(45) Date of publication and mention
of the grant of the patent:
**14.01.2026 Bulletin 2026/03**

(51) International Patent Classification (IPC):
***B60W 50/14*** (2020.01)

(21) Application number: **23213316.5**

(22) Date of filing: **30.11.2023**

(52) Cooperative Patent Classification (CPC):
**B60W 50/14;** B60W 2050/143; B60W 2540/225;
B60W 2540/229; B60W 2552/05; B60W 2552/30;
B60W 2554/406; B60W 2555/20

(54) **EYE-FREE DRIVING ASSISTANCE SYSTEM AND METHOD, ELECTRONIC DEVICE, AND STORAGE MEDIUM**

AUGENFREIES FAHRASSISTENZSYSTEM UND -VERFAHREN, ELEKTRONISCHE VORRICHTUNG UND SPEICHERMEDIUM

SYSTÈME ET PROCÉDÉ D'AIDE À LA CONDUITE SANS IL, DISPOSITIF ÉLECTRONIQUE ET SUPPORT D'INFORMATIONS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **26.07.2023 CN 202310927674**

(43) Date of publication of application:
**29.01.2025 Bulletin 2025/05**

(73) Proprietor: **Chongqing Changan Automobile Co., Ltd.**
**Chongqing 400023 (CN)**

(72) Inventors:
• **DENG, Jie**
**Jiangbei District, Chongqing, 400023 (CN)**
• **HUANG, Fuyan**
**Jiangbei District, Chongqing, 400023 (CN)**

(74) Representative: **M. Zardi & Co S.A.**
**Via G. B. Pioda, 6**
**6900 Lugano (CH)**

(56) References cited:
DE-A1- 102014 220 759    DE-A1- 102019 133 306
DE-A1- 102021 117 350    US-A1- 2021 039 678
US-B1- 10 752 253

**Description**

**Field of the Invention**

The present invention relates to the technical field of assistance driving, and in particular, to an eye-free driving assistance system and method, an electronic device, and a storage medium.

**Background of the Invention**

At present, automatic driving systems and advanced driving assistance systems are more and more widely used in modem vehicles. Using an eye tracking technology in these systems has become a general practice, for example, a driver monitor system (DMS) monitors a state of a driver so as to confirm whether the driver is aware of the surrounding driving environment such as roads. Since these most advanced automatic driving systems are still not reliable completely, it is necessary for the driver to observe surrounding environments such as the roads when an automatic driving control system believes that the driver needs to take over the control of the vehicle. In addition, the DMS is also needed to prevent the driver from abusing the capacity of the automatic driving system. The most advanced automatic driving technology is to allow the sight of the driver to leave the road for a preset period of time at present, and the DMS and the automatic driving system on the vehicle can be used for determining the longest time for the sight of the driver to leave the road, and issuing an alarm and a take-over request accordingly.

However, although the current most advanced DMS ensures that the sight of the driver does not leave the road for more than a predetermined allowable time, and provides a safety function for the operation of the automatic driving vehicle, the allowable time is fixed, so that the attention freedom of the driver during the driving is insufficient.

US 2021/0039 678A1 discloses a state determination device for determining the state of a vehicle driver. It involves checking the gaze direction of the driver. However, it does not disclose determining static eye-free time allowance according to the eye gaze information of a driver.

DE102014220759A addresses eye closing time of a driver, which time is compared to a time threshold depending on vehicle speed. Further parameters may be considered, e.g. steering or lane parameters. It does not mention a static time allowance and a dynamic adjustment factor.

**Summary of the Invention**

Embodiments of the present invention provide an eye-free driving assistance system and method, an electronic device, and a storage medium, which dynamically adjusts the time for sight of a driver to leave roads by considering various influencing factors so as to improve the value accuracy of the allowable time for the sight of the driver to leave the roads in difference scenes, thereby improving the attention freedom of the driver during driving.

In a first aspect, an embodiment of the present invention provides an eye-free driving assistance system, the eye-free driving assistance system including:

a static eye-free time module, configured to determine static eye-free time allowance corresponding to eye gaze information according to the eye gaze of a driver;

a dynamic eye-free factor processing module, configured to determine a dynamic eye-free time adjusting factor according to each dynamic factor information influencing vehicle running;

an eye-free time adjusting module, configured to determine allowable eye-free time according to the static eye-free time allowance and the dynamic eye-free time adjusting factor; and

an eye-free time monitor in an automatic driving HMI system, configured to receive the allowable eye-free time and monitor the eye-free time of the driver, compare the allowable eye-free time with the eye-free time to obtain a comparison result, and issue an alarm to a driver warning system according to the comparison result.

Optionally, a system cooperating with the eye-free driving assistance system includes:

a DMS, configured to acquire eye gaze information of the driver;

a sensor system, the sensor system including a plurality of sensors for sensing each dynamic factor information; and

an automatic driving HMI system, a dynamic eye-free factor collection module in the automatic driving HMI system being configured to receive each sensed dynamic factor information.

Optionally, the static eye-free time module includes:

an eye gaze identification module, configured to parse the eye gaze information to determine an eye gaze state corresponding to the eye gaze information, and generate an identifiable eye gaze feature with the state information of the eye gaze state; and

a static eye-free time evaluation module, configured to determine static eye-free time allowance corresponding to the identifiable eye gaze feature according to the identifiable eye gaze feature.

Optionally, the eye gaze state in the eye gaze identification module includes a specific position of eye gaze or a specific direction of the eye gaze;

in a case that the eye gaze state in the eye gaze identification module is the specific position of the eye gaze, the state information of the eye gaze state is the position information of an eye gaze position; and

in a case that the eye gaze state in the eye gaze identification module is the specific direction of the eye gaze, the state information of the eye gaze state is the direction information of an eye gaze direction.

Optionally, the dynamic eye-free factor processing module includes:

a dynamic eye-free factor analysis module, configured to determine each dynamic eye-free time evaluation factor corresponding to each dynamic factor information according to each dynamic factor information; and

a dynamic eye-free factor integration module, configured to calculate each dynamic eye-free time evaluation factor to obtain a corresponding dynamic eye-free time adjusting factor.

Optionally, the dynamic eye-free factor analysis module includes:

a dynamic factor identification module, configured to identify each dynamic factor information to determine each dynamic factor state corresponding to each dynamic factor information; and

a dynamic factor evaluation module, configured to determine each dynamic eye-free time evaluation factor corresponding to each dynamic factor state according to a correspondence between the dynamic factor state of each dynamic factor and the dynamic eye-free time evaluation factor and each dynamic factor state.

Optionally, each dynamic eye-free time evaluation factor in the dynamic factor evaluation module is a dimensionless quantity with a lower limit of 0 and an upper limit of 1.

Optionally, each dynamic eye-free time evaluation factor in the dynamic factor evaluation module is a time-dimension quantity with a lower limit of a negative number and an upper limit of a positive number.

Optionally, in a case that each dynamic eye-free time evaluation factor is the dimensionless quantity, the eye-free time adjusting module is configured to multiply the static eye-free time allowance with the dynamic eye-free time adjusting factor to obtain allowable eye-free time.

Optionally, in a case that each dynamic eye-free time evaluation factor is the time-dimension quantity, the eye-free time adjusting module is configured to calculate the static eye-free time allowance and the dynamic eye-free time adjusting factor based on a preset algorithm to obtain the allowable eye-free time.

Optionally, each dynamic factor in the dynamic eye-free factor processing module at least includes a traffic dynamic factor, a road dynamic factor, an environment dynamic factor, a vehicle dynamic factor, and a driver dynamic factor;

states of the traffic dynamic factor at least include: no traffic, low flow, medium flow, high-medium flow, high flow, and traffic accident;

states of the road dynamic factor at least include: no curvature, low curvature, medium curvature, medium-high curvature. high curvature, and road construction;

states of the environment dynamic factor at least include: no environmental influence, wind, rain, snow, fog, and icing;

states of the vehicle dynamic factor at least include: no problem, minor problem, medium problem, and serious problem; and

states of the driver dynamic factor at least include: alertness, low drowsiness, medium drowsiness, high drowsiness, and unconsciousness.

In a second aspect, an embodiment of the present invention provides an eye-free driving assistance method. The method includes:

determining static eye-free time allowance corresponding to eye gaze information according to the eye gaze of a driver;
determining a dynamic eye-free time adjusting factor according to each dynamic factor information influencing vehicle running;
determining allowable eye-free time according to the static eye-free time allowance and the dynamic eye-free time adjusting factor;
comparing the allowable eye-free time with the monitored eye-free time of the driver to obtain a comparison result; and
issuing an alarm to the driver according to the comparison result.

In a third aspect, an embodiment of the present invention provides a vehicle comprising the above defined driving assistance system.
In a fourth aspect, an embodiment of the present invention provides a computer readable storage medium, the computer readable storage medium having a computer program stored thereon, the computer program, when executed by a processor, implementing the eye-free driving assistance method according to the second aspect of the present invention.
The eye-free driving assistance system provided by the embodiments of the present invention determines the static eye-free time allowance corresponding to the eye gaze information according to the eye gaze information of the driver through the static eye-free time module; determines the dynamic eye-free time adjusting factor according to each dynamic factor information influencing the vehicle running through the dynamic eye-free factor processing module; and finally processes the received static eye-free time allowance determined by the static eye-free time module and the received dynamic eye-free time adjusting factor determined by the dynamic eye-free factor processing module to determine the allowable eye-free time through the eye-free time adjusting module; and the eye-free time monitor in the automatic driving HMI system receives the allowable eye-free time, monitors the eye-free time of the driver, compares the allowable eye-free time with the eye-free time to obtain the comparison result, and issues an alarm to the driver warning system according to the comparison result. According to the present invention, in a process of determining the allowable time for the sight of eyes of the driver to leave the road during the driving, the allowable time for the sight of the driver to leave the road during the driving is adjusted dynamically by considering various dynamic environment factors influencing the safety of the vehicle running to more accurately determine the allowable time for the sight of eyes of the driver to leave the road during the driving in different automatic driving scenes, so that on the premise of ensuring the safety of the automatic driving, the attention freedom of the driver during the driving is improved, the driving fatigue of the driver can be alleviated effectively, and the driving experience of comfort and convenience in the automatic driving can be enhanced

## Brief Description of the Drawings

To more clearly describe the technical solutions in the embodiments of the present invention, the drawings required to be used in the description of the embodiments of the present invention are simply presented below. Apparently, the following drawings show some embodiments of the present invention, so for those ordinary skilled in the art, other drawings can also be obtained according to these drawings without contributing creative labor.

Fig. 1 is a structural block diagram of an eye-free driving assistance system according to an embodiment of the present invention;

Fig. 2 is a structural diagram of an eye-free driving assistance system and a relevant system cooperating with the eye-free driving assistance system according to an embodiment of the present invention;

Fig. 3 is an operational flowchart of an eye-free driving assistance system according to an embodiment of the present invention;

Fig. 4 is a schematic diagram of an eye gaze position in an eye-free driving assistance system according to an embodiment of the present invention;

Fig. 5 is a schematic diagram of an eye gaze direction in an eye-free driving assistance system according to an embodiment of the present invention;

Fig. 6 is a structural block diagram of a dynamic eye-free factor processing module of an eye-free driving assistance system according to an embodiment of the present invention;

Fig. 7 is a schematic diagram of a correspondence between states of various dynamic factors in an eye-free driving assistance system and allowable eye-free time according to an embodiment of the present invention;

Fig. 8 is a working flowchart of an eye-free driving assistance system according to an embodiment of the present invention.

In the drawings, 100-vehicle configured with an eye-free driving assistance system; 110-driver monitor system (DMS); 112-eye gaze information; 120-dynamic eye-free factor collection module; 122-dynamic factor information; 130-driver warning system; 140-sensor system; 150-automatic driving HMI system; 155-eye-free time monitor; 200-eye-free driving assistance system; 250-allowable eye-free time; 300-dynamic eye-free factor processing module; 310-dynamic eye-free factor analysis module; 312-dynamic factor identification module; 314-dynamic factor evaluation module; 316-dynamic eye-free time evaluation factor; 320-dynamic eye-free factor integration module; 325-dynamic eye-free time adjusting factor; 400-static eye-free time module; 410-eye gaze identification module; 415-eye gaze feature; 420-static eye-free time evaluation module; 425-static eye-free time allowance; 450-eye-free time adjusting module.

## Detailed Description of the Embodiments

Technical solutions in embodiments of the present invention are clearly and completely described in combination with accompanying drawings in embodiments of the present invention. Apparently, the described embodiments are merely some embodiments of the present invention. not all embodiments. Based on the embodiments of the present invention, all other embodiments obtained by those ordinary skilled in the art without creative effort fall within the protection scope of the present invention.

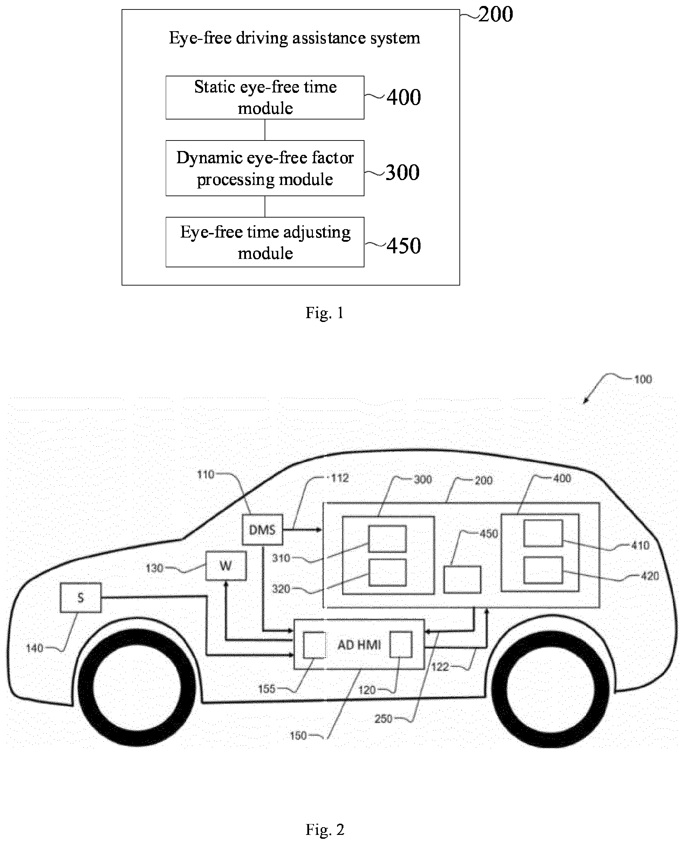

Referring to Fig. 1, Fig. 1 is a structural block diagram of an eye-free driving assistance system according to an embodiment of the present invention. As shown in Fig. 1, the eye-free driving assistance system 200 of the present embodiment includes:

a static eye-free time module 400, configured to determine static eye-free time allowance corresponding to eye gaze information according to the eye gaze information of a driver;

a dynamic eye-free factor processing module 300, configured to determine a dynamic eye-free time adjusting factor according to each dynamic factor information influencing vehicle running;

an eye-free time adjusting module 450, configured to determine allowable eye-free time according to the static eye-free time allowance and the dynamic eye-free time adjusting factor; and

an eye-free time monitor in an automatic driving HMI system, configured to receive the allowable eye-free time and monitor the eye-free time of the driver, compare the allowable eye-free time with the eye-free time to obtain a comparison result, and issue an alarm to a driver warning system according to the comparison result.

In the present embodiment, the eye-free driving assistance system provided by the present invention is applied to an automatic or semi-automatic driving vehicle. The eye-free driving assistance system is configured to determine the allowable time for sight of a driver to leave roads in the automatic or semi-automatic driving vehicle, i.e. allowable eye-free time of the driver during the driving of the vehicle. In order to reduce the application cost of the eye-free driving assistance system provided by the present invention, relevant data information needed by the eye-free driving assistance system provided by the present invention is supplied by relevant systems equipped in the used vehicle, and the relevant systems equipped by the vehicle cooperate directly or indirectly with the eye-free driving assistance system provided by the present invention. The relevant system equipped in the vehicle and cooperating with the eye-free driving assistance system includes a DMS configured to acquire eye gaze information of the driver; a sensor system including a plurality of sensors for sensing each dynamic factor information; and an automatic driving HMI system, a dynamic eye-free factor collection module in the automatic driving HMI system being configured to receive each sensed dynamic factor information. The vehicles mentioned in the following embodiments are all vehicles using the eye-free driving assistance system provided by the present invention and the related systems mentioned above.

In the present embodiment, as shown in Fig. 2, Fig. 2 is a structural diagram of an eye-free driving assistance system provided by the present invention and a relevant system cooperating with the eye-free driving assistance system. The static eye-free time module in the eye-free driving assistance system is configured to receive the eye gaze information of the driver acquired by the DMS of the vehicle, and parse the received eye gaze information to determine the static eye-free time allowance corresponding to the eye gaze information. The static eye-free time allowance is initial allowable time for eyes of the driver to leave the roads in front of the vehicle, the static eye-free time allowance is dynamically adjusted by the eye-free time adjusting module in the eye-free driving assistance system to obtain the final allowable eye-free time, and the final allowable eye-free time is the final allowable time for the eyes of the driver to leave the roads in front of the vehicle. The DMS is configured to acquire the eye gaze information of the driver, and transmit the acquired eye gaze information of the driver to the eye-free driving assistance system.

At the same time, the dynamic eye-free factor processing module in the eye-free driving assistance system is configured to receive each dynamic factor information influencing the vehicle running and acquired by the dynamic eye-free factor collection module in the automatic driving human machine interface (HMI) system of the vehicle, and parse each received dynamic factor information to determine a dynamic eye-free time adjusting factor corresponding to each dynamic factor information. The dynamic factor information refers to each data information for representing a driving environment state and a driving environment state inside and outside the current vehicle, such as the vehicle flow outside the vehicle, the state of the driver inside the vehicle, etc. The dynamic eye-free time adjusting factor is a dynamic adjusting parameter for adjusting the determined static eye-free time allowance, and the dynamic adjusting parameter changes with difference of each dynamic factor information influencing the vehicle running and sensed by the sensor system of the vehicle. The sensor system of the vehicle includes a plurality of sensors, and the plurality of sensors are configured to sense each dynamic factor information influencing the vehicle running; and the dynamic eye-free factor collection module in the automatic driving HMI system of the vehicle is configured to collect each dynamic factor information influencing the vehicle running and sensed by the sensors in the sensor system of the vehicle, and transmit the collected dynamic factor information to the eye-free driving assistance system.

After the static eye-free time module and the dynamic eye-free factor processing module in the eye-free driving assistance system determine the static eye-free time allowance and the dynamic eye-free time adjusting factor, the eye-free time adjusting module in the eye-free driving assistance system receives the static eye-free time allowance and dynamic eye-free time adjusting factor determined by the static eye-free time module and dynamic eye-free factor processing module in the eye-free driving assistance system, and calculates the received static eye-free time allowance and dynamic eye-free time adjusting factor to determine the corresponding allowable eye-free time. After calculating the allowable eye-free time of the driver, the eye-free time adjusting module in the eye-free driving assistance system transmits the calculated allowable eye-free time of the driver to the automatic driving HMI system. The eye-free time monitor in the automatic driving HMI system receives the allowable eye-free time, the eye-free time monitor in the automatic driving HMI system also monitors the eye-free time of the driver in real time, and compares the received allowable eye-free time of the driver with the eye-free time of the driver monitored in real time to obtain a comparison result. The eye-free time monitor in the automatic driving HMI system issues an alarm to the driver warning system of the vehicle according to the comparison result, and the driver warning system outputs alarm information to the driver through relevant information output device. The relevant information output device includes, but is not limited to a central control display screen, an audio output device and a light output device.

In the present embodiment, the implementation of issuing the alarm to the driver warning system of the vehicle according to the comparison result includes but is not limited to: when the comparison result indicates that the eye-free time of the driver is more than or equal to the allowable eye-free time, an alarm is issued to the driver warning system of the vehicle; when the comparison result indicates that the eye-free time of the driver reaches a preset percentage of the allowable eye-free time, the alarm is issued to the driver warning system of the vehicle, the preset percentage may be set according to an actual application scene and is not specifically limited herein; when the comparison result indicates that the eye-free time of the driver reaches different percentages of the allowable eye-free time, different levels of alarms are issued to the driver warning system of the vehicle, for example, when the eye-free time reaches 40% of the allowable eye-free time, a low-level alarm is issued to the driver warning system of the vehicle, and the driver is warned by relevant display device (such as the central control display screen, etc.), and when the eye-free time reaches 80% of the allowable eye-free time, a high-level alarm is issued to the driver warning system of the vehicle, and the driver is warned by the relevant audio device. Or when the comparison result indicates that the eye-free time of the driver is more than or equal to the allowable eye-free time, the vehicle is controlled to start slow braking.

The eye-free driving assistance system provided by the embodiments of the present invention determines the static eye-free time allowance corresponding to the eye gaze information according to the eye gaze information of the driver through the static eye-free time module; determines the dynamic eye-free time adjusting factor according to each dynamic factor information influencing the vehicle running through the dynamic eye-free factor processing module; and finally processes the received static eye-free time allowance determined by the static eye-free time module and the received dynamic eye-free time adjusting factor determined by the dynamic eye-free factor processing module to determine the allowable eye-free time through the eye-free time adjusting module; and the eye-free time monitor in the automatic driving HMI system receives the allowable eye-free time, monitors the eye-free time of the driver, compares the allowable eye-free time with the eye-free time to obtain the comparison result, and issues an alarm to the driver warning system according to the comparison result. According to the present invention, in a process of determining the allowable time for the sight of eyes of the driver to leave the road during the driving, the allowable time for the sight of the driver to leave the road during the driving is adjusted dynamically by considering various dynamic environment factors influencing the safety of the vehicle running to more accurately determine the allowable time for the sight of eyes of the driver to leave the road during the driving in different automatic driving scenes, so that on the premise of ensuring the safety of the automatic driving, the attention freedom of the driver during the driving is improved, the driving fatigue of the driver can be alleviated effectively, and the driving experience of comfort and convenience in the automatic driving can be enhanced. During the automatic driving operation, the sight of the driver is allowed to leave the roads in front of the vehicle so as to obtain comfort and convenience. However, the comfort and convenience bring about challenge to the driving safety. By systematically processing various static and dynamic problems related to the eye-free time of the driver, the eye-free driving assistance system provided by the present invention can solve these challenges, and achieves better balance among the characteristics such as safety characteristic, comfort, convenience and the like of the automatic or semi-automatic driving.

In combination with the above embodiments, in an implementation, an embodiment of the present invention also provides an eye-free driving assistance system. In the eye-free driving assistance system, the static eye-free time module specifically may include an eye gaze identification module and a static eye-free time evaluation module; the eye gaze identification module is configured to parse the eye gaze information to determine an eye gaze state corresponding to the eye gaze information, and generate an identifiable eye gaze feature with the state information of the eye gaze state; and the static eye-free time evaluation module is configured to determine the static eye-free time allowance corresponding to the identifiable eye gaze feature according to the identifiable eye gaze feature.

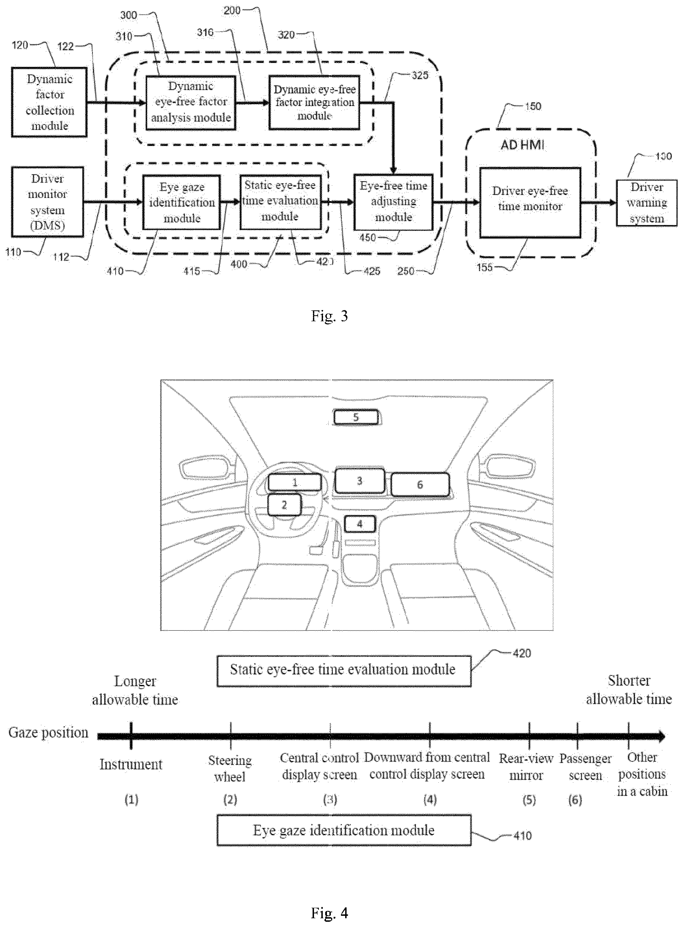

In the present embodiment, as shown in Fig. 3, Fig. 3 is a flowchart of an eye-free driving assistance system provided by the present invention. The eye gaze identification module in the static eye-free time module is configured to receive the eye gaze information of the driver collected by the DMS of the vehicle, and parse the received eye gaze information of the driver to determine the eye gaze state corresponding to the eye gaze information, and generate the identifiable eye gaze feature with the state information of the eye gaze state, so that the static eye-free time evaluation module in the static eye-free time module determines the static eye-free time allowance corresponding to the identifiable eye gaze feature based on the eye gaze feature. The eye gaze state represents a specific eye gaze direction of the driver.

After the eye gaze identification module in the static eye-free time module determines the identifiable eye gaze feature corresponding to the eye gaze information of the driver, the eye gaze identification module transmits the identifiable eye gaze feature to the static eye-free time module. The static eye-free time evaluation module in the static eye-free time module receives the identifiable eye gaze feature, and determines the static eye-free time allowance corresponding to the identifiable eye gaze feature according to the eye gaze feature.

In the present embodiment, the correspondence between the identifiable eye gaze feature and the static eye-free time allowance is pre-defined, and the static eye-free time evaluation module in the static eye-free time module may determine the static eye-free time allowance corresponding to the received identifiable eye gaze feature according to the received identifiable eye gaze feature and the correspondence.

Exemplarily, the identifiable eye gaze feature includes a feature A, a feature B, a feature C, and a feature D; the static eye-free time allowance corresponding to the feature A is a duration a, the static eye-free time allowance corresponding to the feature B is a duration b, the static eye-free time allowance corresponding to the feature C is a duration c, and the static eye-free time allowance corresponding to the feature D is a duration d; when the identifiable eye gaze feature received by the static eye-free time evaluation module in the static eye-free time module is the feature A, the static eye-free time evaluation module in the static eye-free time module may determine that the static eye-free time allowance corresponding to the received feature A is the duration a according to the above correspondence, thereby determining the static eye-free time allowance. Data for distinguishing the difference of the feature A, the feature B, the feature C, and the feature D is state information of the eye gaze state in the identifiable eye gaze feature, which is described in the following embodiment.

In combination with the above embodiments, in an implementation, an embodiment of the present invention also provides an eye-free driving assistance system. In the eye-free driving assistance system, the eye gaze state in the eye gaze identification module has two different representation forms that are the specific position of the eye gaze and the specific direction of the eye gaze respectively; in a case that the eye gaze state in the eye gaze identification module is the specific position of the eye gaze, the state information of the eye gaze state is the position information of the eye gaze position; and in a case that the eye gaze state in the eye gaze identification module is the specific direction of the eye gaze, the state information of the eye gaze state is the direction information of the eye gaze direction.

In the present embodiment, in a case that the representation form of the eye gaze state is the specific position of the eye gaze, Fig. 4 shows various eye gaze states of the present invention, including: a state in which the eyes gaze at an instrument position, that is, the eyes of the driver gaze at a position 1 in Fig. 4; a state in which the eyes gaze at a steering wheel position, that is, the eyes of the driver gaze at the position 2 in Fig. 4; a state in which the eyes gaze at a central control display screen position, that is, the eyes of the driver gaze at the position 3 in Fig. 4; a state in which the eyes gaze at a downward position of the central control display screen, that is, the eyes of the driver gaze at the position 4 in Fig. 4; a state in which the eyes gaze at a rear-view mirror position, that is, the eyes of the driver gaze at the position 5 in Fig, 4; and a state in which the eyes gaze at a co-driver screen position, that is, the eyes of the driver gaze at the position 6 in Fig. 4. It should be noted that the above only preferably describes various pre-defined eye gaze states in the present embodiment, and the eye gaze state of the present invention in the present embodiment may also be the eye gaze state corresponding to other positions other than these pre-defined positions. The eye gaze identification module parses the eye gaze information of the driver collected by the DMS of the vehicle to obtain the corresponding eye gaze state, i.e., obtaining the specific position gazed by the eyes of the driver corresponding to the eye gaze information, such as the above position 1, or the position 2, or the position 3, etc. In the present embodiment, the eye gaze state represents a specific position gazed by the eyes of the driver. The corresponding position state information is preset for each eye gaze state. Exemplarily, continuing to follow the above example, for the eye gaze state that the eyes of the driver gaze at the above position 1, position information 01 is preset for the eye gaze state; for the eye gaze state that the eyes of the driver gaze at the above position 2, position information 02 is preset for the eye gaze state; for the eye gaze state that the eyes of the driver gaze at the above position 3, position information 03 is preset for the eye gaze state; and when the eye gaze identification module parses the eye gaze information to determine that the corresponding eye gaze state is that the eyes of the driver gaze at the above position 1, the identifiable eye gaze feature A with the position information 01 of the eye gaze state is generated. At this time, the static eye-free time evaluation module receives the identifiable eye gaze feature A including the position information 01, so as to determine the static eye-free time allowance a corresponding to the identifiable eye gaze feature A including the position information 01.

In the present embodiment, based on the correspondence between each eye gaze position and the static eye-free time allowance, the static eye-free time allowance may be preliminarily adjusted dynamically according to the state of the eye gaze position. The state of the eye gaze position includes, but is not limited to the size, brightness and display complexity of the gaze position. Exemplarily, when the eye gaze position of the driver is the central control display screen, and when the central control display screen is in the normal brightness, a static eye-free time allowance is determined directly according to the correspondence between the eye gaze position and the static eye-free time allowance; when the brightness of the central control display screen is relatively high, a static eye-free time allowance is determined according to the correspondence between the eye gaze position and the static eye-free time allowance, then the static eye-free time allowance is multiplied by a numerical value greater than 1 corresponding to the current display brightness so as to correct the determined static eye-free time allowance to a static eye-free time allowance greater than the static eye-free time allowance, and the static eye-free time allowance is determined as the static eye-free time allowance corresponding to that the eye gaze position of the driver is the central control display screen. For example, when the central control display screen is in the normal brightness, the static eye-free time allowance is determined to be 8 S according to the correspondence between the eye gaze position and the static eye-free time allowance, and 8 S is directly determined as the static eye-free time allowance of the driver; and when the brightness of the central control display screen is relatively high, the static eye-free time allowance is determined to be 8 S according to the correspondence between the eye gaze position and the static eye-free time allowance, a numerical value 1.5 corresponding to the brightness is also determined, and $8 \times 1.5 = 12S$ is determined to be the static eye-free time allowance of the driver.

In the present embodiment, the above-mentioned eye gaze position is used as the representation form of the eye gaze state. A preferred implementation of the correspondence between each gaze position and the static eye-free time allowance in the present invention is as shown in the following table 1. It should be noted that table 1 only shows one preferred implementation, other correspondences between the gaze position and the static eye-free time allowance may also be pre-defined by the present invention, and the correspondence between other gaze positions and the static eye-free time allowance may also be pre-defined.

| Table 1 | | | | | | |
|---------|---|---|---|---|---|---|
| Gaze position | Instrument | Steering wheel | Vehicle-mou nted central control display screen | Downward from the vehicle-mounted central control display screen | Passenger screen | Other positions in a cabin |
| Static eye-free time allowance | Maximal time for eyes to leave roads | Maximal time for the eyes to leave the roads | Maximal time for the eyes to leave the roads | A value between the maximal time and minimal time for the eyes to leave the roads | A value between the maximal time and minimal time for the eyes to leave the roads | Minimal time for the eyes to leave the roads |

In the present embodiment, due to the monitoring precision of the DMS, or the influence of the monitor environment (for example, in an environment with sufficient light, and in a dim environment), the monitor accuracy of the DMS decreases; at this time, in order to improve the accuracy of determining the static eye-free time allowance, when the probability that the DMS identifies two or more of the eye gaze positions of the driver is greater than a set threshold, the driver is determined to simultaneously gaze at two or more eye gaze positions, the static eye-free time allowance corresponding to the two or more eye gaze positions respectively are obtained, the static eye-free time allowance corresponding to the two or more eye gaze positions is averaged, and the obtained average value is determined as the current static eye-free time allowance of the driver. For example, the set threshold is 70%, the DMS identifies that the probability that the current eye gaze position is the position 1 is 75%, the probability that the current eye gaze position is the position 2 is 80%, the probability that the current eye gaze position is the position 3 is 79%, the probability that the current eye gaze position is the position 4 is 20%; at this time, according to the correspondence between the eye gaze position and the static eye-free time allowance, it is determined that the static eye-free time allowance corresponding to the position 1 gazed by the eyes is 2 S, the static eye-free time allowance corresponding to the position 2 gazed by the eyes is 2.5 S, the static eye-free time allowance corresponding to the position 3 gazed by the eyes is 1.5 S; and since the probability corresponding to each of the position 1, the position 2, and the position 3 is more than the set threshold (70%), the static eye-free time allowance corresponding to the position 1, the position 2 and the position 3 is averaged to obtain a result 2 S, so that the current static eye-free time allowance of the driver is determined as the average value 2 s.

In the present embodiment, another implementation of determining the static eye-free time allowance according to the specific position gazed by the driver in the vehicle is that in a case that the eyes of the driver gaze at a pre-defined position in the vehicle, it is determined that the value of the static eye-free time allowance corresponding to the position is greater; and in a case that the eyes gaze at the position that is not pre-defined, it is determined that the value of the static eye-free time allowance corresponding to the position is smaller. For example, in a case that the eye gaze identification module determines, based on the eye gaze information from DMS, any HMI display (including the rear-view mirror) position in the vehicle cabin at which the driver is gazing, such as the vehicle-mounted central control display screen, vehicle-mounted instruments or a visual interaction device capable of being connected to the vehicle and brought by the driver into the vehicle, it is determined that the value of the static eye-free time allowance corresponding to the position is greater. Through the implementation, the vehicle may display an alarm or any type of information directly to the screen gazed by the eyes of the driver to attract the attention of the driver when necessary, thereby achieving a purpose of warning the driver. In addition, the position of an HMI displayer of the vehicle cabin may also play a role in determining the static eye-free time allowance: in a case that the eyes gaze at the position of the HMI displayer close to the front road, it is determined that the value of the static eye-free time allowance corresponding to the position is greater; and in a case that the eyes gaze at the position of the HMI displayer far away from the front road, it is determined that the value of the static eye-free time allowance corresponding to the position is smaller.

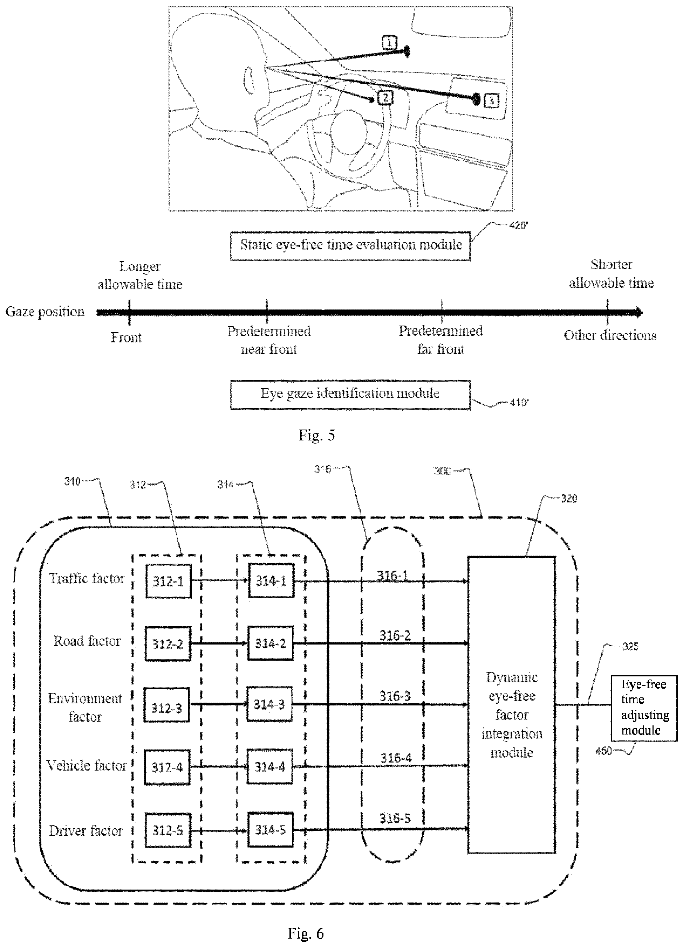

In the present embodiment, according to the present invention, in order to increase the application range, the precision of the eye gaze state decreases, and the eye gaze direction is used as a representation form of the eye gaze state. In a case that the representation form of the eye gaze state is a specific direction of the eye gaze, Fig. 5 shows various eye gaze states of the present invention, including: a state in which the eyes gaze at a forward direction, i.e. a direction 1 in Fig. 5 gazed by the eyes of the driver; a state in which the eyes gaze at a pre-defined near front direction, i.e. a direction 2 in Fig. 5 gazed by the eyes of the driver; and a state in which the eyes gaze at a far front direction, i.e. a direction 3 in Fig. 5 gazed by the eyes of the driver. It should be noted that the above only preferably describes various pre-defined eye gaze states in the present embodiment, and the eye gaze state of the present invention in the present embodiment may also be the eye gaze state corresponding to other directions other than these pre-defined directions. The eye gaze identification module parses the eye gaze information of the driver collected by the DMS of the vehicle to obtain the corresponding eye gaze state, i.e., obtaining the specific direction gazed by the eyes of the driver corresponding to the eye gaze information, such as the above direction 1, or the direction 2, or the direction 3, etc. In the present embodiment, the eye gaze state represents a specific direction of the eye gaze of the driver. The corresponding direction state information is preset in advance for each eye gaze state. Exemplarily, continuing to follow the above example, for the eye gaze state that the eyes of the driver gaze at the above direction 1, direction information 001 is preset in advance for the eye gaze state; for the eye gaze state that the eyes of the driver gaze at the above direction 2, direction information 002 is preset in advance for the eye gaze state; for the gaze state that the eyes of the driver gaze at the above direction 3, direction information 003 is preset in advance for the eye gaze state; and when the eye gaze identification module parses the eye gaze information to determine that the corresponding eye gaze state is that the eyes of the driver gaze at the above direction 1, the identifiable eye gaze feature B with the direction information 001 of the eye gaze state is generated. At this time, the static eye-free time evaluation module receives the identifiable eye gaze feature A including the direction information 001, so as to determine the static eye-free time allowance b corresponding to the identifiable eye gaze feature B including the direction information 001.

In combination with the above embodiments, in an implementation, an embodiment of the present invention also provides an eye-free driving assistance system. In the eye-free driving assistance system, the dynamic eye-free factor processing module may specifically include a dynamic eye-free factor analysis module and a dynamic eye-free factor integration module; the dynamic eye-free factor analysis module is configured to determine each dynamic eye-free time evaluation factor corresponding to each dynamic factor information respectively; and the dynamic eye-free factor integration module is configured to calculate the dynamic eye-free time evaluation factors to obtain a corresponding dynamic eye-free time adjusting factor.

In the present embodiment, the dynamic eye-free factor analysis module in the dynamic eye-free factor processing module is configured to receive each dynamic factor information collected by the dynamic eye-free factor collection module in the automatic driving HMI system, and parse the received dynamic factor information to determine each dynamic eye-free time evaluation factor corresponding to the dynamic factor information respectively. After the dynamic eye-free factor analysis module in the dynamic eye-free factor processing module determines each dynamic eye-free time evaluation factor corresponding to the dynamic factor information, the dynamic eye-free factor analysis module transmits each dynamic eye-free time evaluation factor to the dynamic eye-free factor integration module. The dynamic eye-free factor integration module in the dynamic eye-free factor processing module receives the dynamic eye-free time evaluation factors determined by the dynamic eye-free factor analysis module in the dynamic eye-free factor processing module, and calculates the received dynamic eye-free time evaluation factors to obtain a corresponding dynamic eye-free time adjusting factor; and the dynamic eye-free time adjusting factor is used for calculation with the determined static eye-free time allowance to obtain the final allowable eye-free time so as to dynamically adjust the determined static eye-free time allowance. The dynamic adjustment of the static eye-free time allowance may be achieved by multiplying the dynamic eye-free time adjusting factor with the static eye-free time; or performed by machine learning, statistical analysis, or some optimization processes; or realized by increasing or reducing time on the static eye-free time allowance with any other compatible mathematic principles, which may be described in the following embodiments.

In the present embodiment, the dynamic factor information received by the dynamic eye-free factor analysis module may be collected by the dynamic eye-free factor collection module in the automatic driving HMI system, or received by communication between any type of vehicles and infrastructures, including data stored in a cloud-based information system communicated through an HMI module or in other ways.

In combination with the above embodiments, in an implementation, an embodiment of the present invention also provides an eye-free driving assistance system. In the eye-free driving assistance system, the dynamic eye-free factor analysis module may specifically include a dynamic factor identification module and a dynamic factor evaluation module; the dynamic factor identification module is configured to identify each dynamic factor information to determine the dynamic factor state corresponding to each dynamic factor information; and the dynamic factor evaluation module is configured to determine each dynamic eye-free time evaluation factor corresponding to each dynamic factor state according to the correspondence between the dynamic factor state of each dynamic factor and the dynamic eye-free time evaluation factor and each dynamic factor state.

In the present embodiment, the dynamic factor identification module in the dynamic eye-free factor analysis module receives each dynamic factor information collected by the dynamic eye-free factor collection module in the automatic driving HMI system, and identify each received dynamic factor information to determine the dynamic factor state corresponding to each dynamic factor information. Each dynamic factor information refers to each data information for representing the driving environment states inside and outside the current vehicle, such as the vehicle flow outside the vehicle, the state of the driver inside the vehicle, etc. The dynamic factor state represents the specific environment state obtained by identifying the dynamic factor information corresponding to the dynamic factor state. For example, when the dynamic factor information belongs to the vehicle flow data information sensed by the sensor, the vehicle flow data information is identified to obtain the vehicle flow environment state, such as a low flow, a medium flow, a high flow, etc.; and when the dynamic factor information belongs to the driver state data information sensed by the sensor, the driver state data information is identified to obtain the state of the driver, such as low drowsiness, medium drowsiness, high drowsiness, etc.

In the present embodiment, the dynamic factors include a plurality of types; and a plurality of states corresponding to the dynamic factor are pre-defined for each dynamic factor, and a corresponding dynamic eye-free time evaluation factor is pre-defined for each state.

Exemplarily, the types of the dynamic factor include a dynamic factor A, a dynamic factor B, a dynamic factor C, and a dynamic factor D; various states of the dynamic factor A are pre-defined as a state a1, a state a2, and a state a3, various states of the dynamic factor B are pre-defined as a state b1, a state b2, a state b3, a state b4, and a state b5, various states of the dynamic factor C are pre-defined as a state c1, a state c2, and a state c3, various states of the dynamic factor C are pre-defined as a state c1, a state c2, a state c3, and a state c4, and various states of the dynamic factor D are pre-defined as a state d1, a state d2, a state d3, and a state d4; and the correspondence between the dynamic factor state of each dynamic factor and the dynamic eye-free time evaluation factor is pre-defined, for example, the dynamic eye-free time evaluation factor corresponding to the state a1 is pre-defined as a01, the dynamic eye-free time evaluation factor corresponding to the state a2 is pre-defined as a02, the dynamic eye-free time evaluation factor corresponding to the state a3 is pre-defined as a03, the dynamic eye-free time evaluation factor corresponding to the state b1 is pre-defined as b01, the dynamic eye-free time evaluation factor corresponding to the state b2 is pre-defined as b02, the dynamic eye-free time evaluation factor corresponding to the state b3 is pre-defined as b03, the dynamic eye-free time evaluation factor corresponding to the state b4 is pre-defined as b04, the dynamic eye-free time evaluation factor corresponding to the state b5 is pre-defined as b05, the dynamic eye-free time evaluation factor corresponding to the state c1 is pre-defined as c01, the dynamic eye-free time evaluation factor corresponding to the state c2 is pre-defined as c02, the dynamic eye-free time evaluation factor corresponding to the state c3 is pre-defined as c03, the dynamic eye-free time evaluation factor corresponding to the state d1 is pre-defined as d01, the dynamic eye-free time evaluation factor corresponding to the state d2 is pre-defined as d02, the dynamic eye-free time evaluation factor corresponding to the state d3 is pre-defined as d03, and the dynamic eye-free time evaluation factor corresponding to the state d4 is pre-defined as d04.

After the dynamic factor identification module in the dynamic eye-free factor analysis module determines the dynamic factor state corresponding to each dynamic factor information, the dynamic factor evaluation module in the dynamic eye-free factor analysis module receives the dynamic factor state determined by the dynamic factor identification module, and determines the dynamic eye-free time evaluation factor corresponding to each dynamic factor state according to the correspondence between the dynamic factor state of each dynamic factor and the dynamic eye-free time evaluation factor.

Exemplarily, continuing to following the above example, when the dynamic factor identification module in the dynamic eye-free factor analysis module determines that the dynamic factor state corresponding to each dynamic factor information is the state a1 of the dynamic factor A, the state b2 of the dynamic factor B, the state c2 of the dynamic factor C, and the state d3 of the dynamic factor D, the dynamic factor evaluation module in the dynamic eye-free factor analysis module receives the states corresponding to the dynamic factors, and determines the dynamic eye-free time evaluation factor a01 corresponding to the state a1 of the dynamic factor A, the dynamic eye-free time evaluation factor b02 corresponding to the state b2 of the dynamic factor B, the dynamic eye-free time evaluation factor c02 corresponding to the state c2 of the dynamic factor C, and the dynamic eye-free time evaluation factor d03 corresponding to the state d3 of the dynamic factor D according to the correspondence between the dynamic factor state of each dynamic factor and the dynamic eye-free time evaluation factor.

In the present embodiment, Fig. 6 shows a structural block diagram of a dynamic eye-free factor processing module in the present invention. The dynamic eye-free factor processing module includes a dynamic eye-free factor analysis module and a dynamic eye-free factor integration module. The dynamic eye-free factor analysis module generates a dynamic eye-free time evaluation factor, and transmits the generated dynamic eye-free time evaluation factor to the dynamic eye-free factor integration module. The dynamic eye-free factor integration module generates a dynamic eye-free time adjusting factor, and transmits the generated dynamic eye-free time adjusting factor to the eye-free time adjusting module. The dynamic eye-free factor analysis module includes a dynamic factor identification module for identifying each dynamic factor information to obtain the corresponding dynamic factor state, and a dynamic factor evaluation module for determining each dynamic eye-free time evaluation factor corresponding to each dynamic factor state according to the correspondence between the dynamic factor state of each dynamic factor and the dynamic eye-free time evaluation factor and each dynamic factor state. As shown in Fig. 6, for different types of dynamic factors, the dynamic factor identification module includes a plurality of dynamic factor identification modules (such as, 312-1, 312-2, 312-3, 312-4, and 312-5 in Fig. 6); one dynamic factor identification module is configured to identify the dynamic factor information of one type of dynamic factor; the dynamic factor evaluation module includes a plurality of dynamic factor evaluation modules (such as 314-1, 314-2, 314-3, 314-4, and 314-5 in Fig. 6), and one dynamic factor evaluation module is configured to determine the dynamic eye-free time evaluation factor corresponding to one type of dynamic factor, and the corresponding generated dynamic eye-free time evaluation factor includes the dynamic eye-free time evaluation factors (such as 316-1, 316-2, 316-3, 316-4, and 316-5 in Fig. 6) corresponding to a specific state of each type of dynamic factor. For each type of dynamic factor, there is the corresponding dynamic factor identification module and dynamic factor evaluation module for processing relevant data of the corresponding type of dynamic factor so as to obtain the dynamic eye-free time evaluation factor corresponding to the specific state of each type of dynamic factor. Therefore, in the process of determining the dynamic eye-free time adjusting factor, the corresponding dynamic factors may be selected according to the actual application scene to determine the dynamic eye-free time adjusting factor. For example, in the application scene 1, only the traffic dynamic factor and the environment dynamic factor are considered; in the application scene 2, only the traffic dynamic factor, the road dynamic factor and the road dynamic factor are considered; in a traffic environment scene where the vehicle is in a stop-and-go state, the static eye-free time allowance is dynamically adjusted directly according to the movement of the pilot vehicle; and in the traffic environment scene where the vehicle is located at a traffic light, the static eye-free time allowance is dynamically adjusted according to the duration of a red-light signal.

In combination with the above embodiments, in an implementation, an embodiment of the present invention also provides an eye-free driving assistance system. In the eye-free driving assistance system, each dynamic eye-free time evaluation factor in the dynamic factor evaluation module is a dimensionless quantity with a lower limit of 0 and an upper limit of 1.

In the present embodiment, each dynamic eye-free time evaluation factor in the dynamic factor evaluation module is a dimensionless quantity with a lower limit of 0 and an upper limit of 1. A dynamic eye-free time adjusting factor calculated based on each dynamic eye-free time evaluation factor is also a dimensionless quantity, and in the present embodiment, the dynamic eye-free time adjusting factor may be used as a weight to participate in the dynamic adjustment of the static eye-free time allowance.

In the present embodiment, due to the poor environment state, the static eye-free time allowance of the driver is adjusted to be a smaller value, which is beneficial for ensuring the safety of the vehicle running; when the environment state is good, the static eye-free time allowance of the driver is kept at the current value or adjusted to be a greater value, the attention freedom of the driver during the driving can be improved, so that the driving fatigue of the driver can be alleviated effectively, and the driving experience of comfort and convenience in automatic driving can be enhanced. Therefore, according to the present invention, for the dynamic factor state with poor environment state, a smaller value is set for the corresponding dynamic eye-free time evaluation factor, and for the dynamic factor state with good environment state, a greater value is set for the corresponding dynamic eye-free time evaluation factor. Based on this, according to the present invention, an implementation for calculating the dynamic eye-free time evaluation factors to obtain the corresponding dynamic eye-free time adjusting factor is provided as follows: the determined dynamic eye-free time evaluation factors are multiplied to obtain the corresponding dynamic eye-free time adjusting factor.

In the present embodiment, when the number of the types of dynamic factors concerned in the present invention is large, when the dynamic eye-free time adjusting factor is determined through the above implementation, there may be more values less than 1 that are multiplied, resulting in a small dynamic eye-free time adjusting factor that is finally obtained, so that the accuracy of the finally obtained dynamic eye-free time adjusting factor is low. Therefore, in order to obtain more accurate dynamic eye-free time adjusting factor, for calculating the dynamic eye-free time evaluation factors to obtain the corresponding dynamic eye-free time adjusting factor, the present invention provides another implementation: the determined dynamic eye-free time evaluation factors are added to obtain a total value, each determined dynamic eye-free time evaluation factor is compared with the total value respectively to obtain a plurality of ratios, then the plurality of ratios are sequenced in a descending order, the dynamic eye-free time evaluation factors are sequenced in an ascending order, then the two sequenced results are multiplied according to the corresponding position, and the obtained value is added to obtain the final dynamic eye-free time adjusting factor. Exemplarily, the values of each determined dynamic eye-free time evaluation factor are 0.1, 0.4, 0.5, and 0.6, the total value obtained by adding each determined dynamic eye-free time evaluation factor is 1.6, and each determined dynamic eye-free time evaluation factor is compared with the total value to obtain a plurality of ratios such as 0.1/1.6, 0.4/1.6, 0.5/1.6, and 0.6/1.6; the ratios 0.1/1.6, 0.4/1.6, 0.5/1.6, and 0.6/1.6 are sequenced in a descending order as 0.6/1.6, 0.5/1.6, 0.4/1.6, and 0.1/1.6; 0.1, 0.4, 0.5, and 0.6 are sequenced in an ascending order as 0.1, 0.4, 0.5, and 0.6; and the two sequenced results are multiplied on the corresponding position and then added to obtain the final dynamic eye-free time adjusting factor $0.6/1.6 \times 0.1 + 0.5/1.6 \times 0.4 + 0.4/1.6 \times 0.5 + 0.1/1.6 \times 0.6 = 0.325$. At the same time, in order to ensure the safety of the vehicle running, when there is the dynamic eye-free time evaluation factor with the value of 0 in the concerned dynamic eye-free time evaluation factors, the dynamic eye-free time adjusting factor determined based on each dynamic eye-free time evaluation factor is 0. It is ensured that as long as there is one of concerned environment factors reaches the poor state, the value of the dynamic eye-free time adjusting factor is 0, so as to ensure the safety of the vehicle running, and further the static eye-free time allowance is dynamically adjusted to be 0 based on the dynamic eye-free time adjusting factor.

It should be noted that calculating the dynamic eye-free time evaluation factors to obtain the corresponding dynamic eye-free time adjusting factor may also be achieved by using any other compatible mathematic principal implementations to determine the dynamic eye-free time adjusting factor, which is not specifically limited herein.

In combination with the above embodiments, in an implementation, an embodiment of the present invention also provides an eye-free driving assistance system. In the eye-free driving assistance system, in a case that each dynamic eye-free time evaluation factor is a dimensionless quantity, the eye-free time adjusting module is configured to multiply the static eye-free time allowance with the dynamic eye-free time adjusting factor to obtain allowable eye-free time.

In the present embodiment, when each dynamic eye-free time evaluation factor in the dynamic factor evaluation module is the dimensionless quantity with a lower limit of 0 and an upper limit of 1, a dynamic eye-free time adjusting factor determined through the above two implementations is also the dimensionless quantity with the lower limit of 0 and the upper limit of 1, and in the embodiment, the dynamic eye-free time adjusting factor may be used as the weight to participate in the dynamic adjustment of the static eye-free time allowance. Specifically, the eye-free time adjusting module obtains the static eye-free time allowance and the dynamic eye-free time adjusting factor, multiplies the two, and determines the product as the allowable eye-free time of the driver.

In combination with the above embodiments, in an implementation, an embodiment of the present invention also provides an eye-free driving assistance system. In the eye-free driving assistance system, each dynamic eye-free time evaluation factor in the dynamic factor evaluation module is a time-dimension quantity with a lower limit of a negative number and an upper limit of a positive number.

In the present embodiment, each dynamic eye-free time evaluation factor in the dynamic factor evaluation module is the time-dimension quantity with the lower limit of a negative number and the upper limit of a positive number. Correspondingly, a dynamic eye-free time adjusting factor calculated based on each dynamic eye-free time evaluation factor is also a time-free dimensional quantity, and in the present embodiment, the dynamic eye-free time adjusting factor may be used as time to participate in the dynamic adjustment of the static eye-free time allowance.

In the present embodiment, in a case that the dynamic eye-free time evaluation factor is the time-dimension quantity with the lower limit of the negative number and the upper limit of the positive number, a specific implementation of determining the value of the dynamic eye-free time evaluation factor corresponding to each dynamic factor state is as follows: the corresponding dynamic eye-free time evaluation factor is pre-defined directly for each dynamic factor state. For example, in a case that the dynamic factor state of the environment dynamic factor type is rainy weather, the value of the dynamic eye-free time evaluation factor corresponding to the dynamic factor state of the rainy weather is pre-defined as a seconds; and in a case that the dynamic factor state of the traffic dynamic factor type is the high-flow traffic state, the value of the dynamic eye-free time evaluation factor corresponding to the high-flow traffic state is pre-defined as b seconds.

In the present embodiment, in a case that the dynamic eye-free time evaluation factor is the time-dimension quantity with the lower limit of the negative number and the upper limit of the positive number, a specific implementation of determining the value of the dynamic eye-free time evaluation factor corresponding to each dynamic factor state is as follows: a corresponding time value is pre-defined for each type of dynamic factor, and a corresponding weight is pre-defined for each dynamic factor state; and the value of the dynamic eye-free time evaluation factor corresponding to the dynamic factor state is calculated according to the dynamic factor state and the dynamic factor type to which the dynamic factor state belongs. For example, for the environment dynamic factor type, a total time value corresponding to the environment dynamic factor type is pre-defined such as a0 s; a weight x1 is pre-defined for the dynamic factor state X1 included by the environment factor type, a weight x2 is pre-defined for the dynamic factor state X2, a weight x3 is pre-defined for the dynamic factor state X3, a weight x4 is pre-defined for the dynamic factor state X4, and a weight x5 is pre-defined for the dynamic factor state X5; therefore, when the dynamic factor state of the environment dynamic factor type is X1, the time value of the dynamic eye-free time evaluation factor corresponding to the dynamic factor state X1 is determined as $a0 \times x1$.

In the present embodiment, in a case that the dynamic eye-free time evaluation factor is the time-dimension quantity with the lower limit of the negative number and the upper limit of the positive number, another specific implementation of determining the value of the dynamic eye-free time evaluation factor corresponding to each dynamic factor state is as follows: a total value of the dynamic eye-free time adjusting factor is determined, a corresponding weight is pre-defined for different types of dynamic factors according to different influences on the driver driving the vehicle, a higher weight value is set for the dynamic factor type with high influence degree, a lower weight value is set for the dynamic factor type with low influence degree, and the corresponding weight is pre-defined for different dynamic factor states. According to the dynamic factor state, the dynamic factor type to which the dynamic factor state belongs and the total value of the dynamic eye-free time adjusting factor, the value of the dynamic eye-free time evaluation factor corresponding to the dynamic factor state is calculated. For example, a total value t0 of the dynamic eye-free time adjusting factor is pre-defined; for the environment dynamic factor type, a weight corresponding to the environment dynamic factor type is pre-defined such as q0; a weight y1 is pre-defined for the dynamic factor state X1 included by the environment factor type, a weight y2 is pre-defined for the dynamic factor state X2, a weight y3 is pre-defined for the dynamic factor state X3, a weight y4 is pre-defined for the dynamic factor state X4, and a weight y5 is pre-defined for the dynamic factor state X5; therefore, when the dynamic factor state of the environment dynamic factor type is X1, the time value of the dynamic eye-free time evaluation factor corresponding to the dynamic factor state X1 is determined as $t0 \times q0 \times y1$.

In the present embodiment, due to the poor environment state, the static eye-free time allowance of the driver is adjusted to be a smaller value, which is beneficial for ensuring the safety of the vehicle running; when the environment state is good, the static eye-free time allowance of the driver is kept at the current value or adjusted to be a greater value, and the attention freedom of the driver during the driving can be improved, so that the driving fatigue of the driver can be alleviated effectively, and the driving experience of comfort and convenience in automatic driving can be enhanced. Therefore, according to the present invention, for the dynamic factor state with poor environment state, the corresponding dynamic eye-free time evaluation factor is determined as a negative number, and for the dynamic factor state with good environment state, the corresponding dynamic eye-free time evaluation factor is determined as a positive number. Based on this, for calculating the dynamic eye-free time evaluation factors to obtain the corresponding dynamic eye-free time adjusting factor, the present invention provides an implementation as follows: the determined dynamic eye-free time evaluation factors are added to obtain a corresponding dynamic eye-free time adjusting factor.

In combination with the above embodiments, in an implementation, an embodiment of the present invention also provides an eye-free driving assistance system. In the eye-free driving assistance system, in a case that each dynamic eye-free time evaluation factor is a time-dimension quantity, the eye-free time adjusting module is configured to calculate the static eye-free time allowance and the dynamic eye-free time adjusting factor based on a preset algorithm to obtain the allowable eye-free time.

In the present embodiment, when each dynamic eye-free time evaluation factor in the dynamic factor evaluation module is the time-dimension quantity with the lower limit of negative number and the upper limit of positive number, a dynamic eye-free time adjusting factor determined through the above implementation is also the time-dimension quantity with the lower limit of the negative number and the upper limit of the positive number, and in the present embodiment, the dynamic eye-free time adjusting factor may be used as the time to participate in the dynamic adjustment of the static eye-free time allowance. Specifically, in a case that the preset algorithm is a harmonic average, after the eye-free time adjusting module obtains the static eye-free time allowance and the dynamic eye-free time adjusting factor, the obtained static eye-free time allowance and dynamic eye-free time adjusting factor are calculated by the harmonic average algorithm as shown in the following formula 1, thereby obtaining the corresponding allowable eye-free time.

$$x = {2}\Big/{\sum_{i=1}^{2} 1/x_i} \quad (1)$$

In the formula, x is the allowable eye-free time, $x_1$ is the static eye-free time allowance, and $x_2$ is the dynamic eye-free time adjusting factor.

In a case that the preset algorithm is a weighted average, after the eye-free time adjusting module obtains the static eye-free time allowance and the dynamic eye-free time adjusting factor, the obtained static eye-free time allowance and dynamic eye-free time adjusting factor are calculated by the weighted average algorithm as shown in the following formula 2, thereby obtaining the corresponding allowable eye-free time.

$$\bar{x} = {(w_1 x_3 + w_2 x_4)}\Big/{2} \quad (2)$$

In the formula, $\bar{x}$ is the allowable eye-free time; $w_1$ is a weight corresponding to the static eye-free time allowance, and is obtained by an expert grading method; $w_2$ is a weight corresponding to the dynamic eye-free time adjusting factor, and is obtained by the expert grading method; $x_3$ is the static eye-free time allowance; and $x_4$ is the dynamic eye-free time adjusting factor. An implementation of obtaining the weight corresponding to the static eye-free time allowance and the weight corresponding to the dynamic eye-free time adjusting factor through the expert grading method is as follows: accidents in which the vehicle already has property loss are counted, whether the accident is caused by the driver without observing the road or caused by the dynamic factor state in the dynamic factor type is determined by an expert (such as the accident caused by heavy fog, and the accident caused by heavy road congestion) so as to classify the accidents; then the property loss of the counted accidents is added to obtain a total amount of property loss; and then the property loss of the accident caused by the driver without observing the roads is calculated, and the property loss of the accident caused by the influence of the dynamic factor state in the counted accidents is calculated. The property loss of the accident caused by the driver without observing the roads is divided by the total amount of the property loss to obtain a weight corresponding to the static eye-free time allowance; and the property loss of the accident caused by the influence of the dynamic factor state is divided by the total amount of the property loss to obtain a weight corresponding to the dynamic eye-free time adjusting factor.

In a case that the preset algorithm is a geometric average, after the eye-free time adjusting module obtains the static eye-free time allowance and the dynamic eye-free time adjusting factor, the obtained static eye-free time allowance and dynamic eye-free time adjusting factor are calculated by the geometric average algorithm as shown in the following formula 3, thereby obtaining the corresponding allowable eye-free time.

$$\bar{\bar{x}} = \sqrt[2]{x_5 x_6} \ (3)$$

In the formula, $\bar{\bar{x}}$ is the allowable eye-free time; $X_5$ is the static eye-free time allowance, $X_6$ is the dynamic eye-free time adjusting factor.

In combination with the above embodiments, in an implementation, an embodiment of the present invention also provides an eye-free driving assistance system. In the eye-free driving assistance system, each dynamic factor in the dynamic eye-free factor processing module at least includes a traffic dynamic factor, a road dynamic factor, an environment dynamic factor, a vehicle dynamic factor, and a driver dynamic factor;

The states of the traffic dynamic factor at least include: no traffic, low flow, medium flow, high-medium flow, high flow, and traffic accident;

The states of the road dynamic factor at least include: no curvature, low curvature, medium curvature, high-medium curvature, high curvature, and road construction;

The states of the environment dynamic factor at least include: no environmental influence, wind, rain, snow, fog and icing;

The states of the vehicle dynamic factor at least include: no problem, minor problem, medium problem, and serious problem; and

The states of the driver dynamic factor at least include: alertness, low drowsiness, medium drowsiness, high drowsiness, and unconsciousness.

In the present embodiment, each dynamic factor in the dynamic eye-free factor processing module at least includes a traffic dynamic factor, a road dynamic factor, an environment dynamic factor, a vehicle dynamic factor, and a driver dynamic factor.

In a case that the dynamic factor is the traffic dynamic factor, that is, when the environment factor concerned in the dynamic adjustment of the static eye-free time allowance is the traffic environment, traffic congestion means that a shorter allowable eye-free time needs to be given to the driver, and the smooth traffic means that a longer allowable eye-free time needs to be given to the driver. Therefore, the present invention pre-defines various states of the traffic dynamic factor; the received traffic dynamic factor information is identified to determine the specific state corresponding to the traffic dynamic factor; and the dynamic eye-free time evaluation factor corresponding to the specific state is determined based on the pre-defined correspondence between various traffic dynamic factor states and the dynamic eye-free time evaluation factor. The pre-defined states of the traffic dynamic factor at least include no traffic, low flow, medium flow, high-medium flow, high flow, and traffic accident. It should be noted that the pre-defined state of the traffic dynamic factor is only a preferred implementation; according to the actual application scene and different calculation capacity of the vehicle, the state of the traffic dynamic factor may also be other more types of states, or other fewer types of states, for example, the pre-defined state of the traffic dynamic factor includes: low flow, medium flow, high flow, and traffic accident, or the pre-defined state of the traffic dynamic factor includes 10% traffic flow, 20% traffic flow, 30% traffic flow, 40% traffic flow, 50% traffic flow, 60% traffic flow, 70% traffic flow, 80% traffic flow, 90% traffic flow, and 100% traffic flow.

In a case that the dynamic factor is the road dynamic factor, that is, when the environment factor concerned in the dynamic adjustment of the static eye-free time allowance is the road environment, a wide and straight road in a same direction means a longer eye-free time may be given to the driver, and a curve and narrow road means a shorter allowable eye-free time for the driver. Therefore, the present invention pre-defines various states of the road dynamic factor; the received road dynamic factor information is identified to determine the specific state corresponding to the road dynamic factor; and the dynamic eye-free time evaluation factor corresponding to the specific state is determined based on the pre-defined correspondence between various road dynamic factor states and the dynamic eye-free time evaluation factor. The pre-defined states of the road dynamic factor at least include: no curvature, low curvature, medium curvature, medium-high curvature, high curvature, and road construction. It should be noted that the pre-defined state of the road dynamic factor is only a preferred implementation; according to the actual application scene and different calculation capacity of the vehicle, the state of the road dynamic factor may also be other more types of states, or other fewer types of states, for example, the pre-defined state of the road dynamic factor includes: low curvature, medium curvature, high curvature, and road construction.

In a case that the dynamic factor is the environment dynamic factor, that is, when the environment factor concerned in the dynamic adjustment of the static eye-free time allowance is weather environment, the sunny weather means that a longer eye-free time may be given to the driver, while in the rainy weather, the snowy weather, foggy weather or icing weather, a shorter allowable eye-free time is given to the driver. Therefore, the present invention pre-defines various states of the environment dynamic factor; the received environment dynamic factor information is identified to determine the specific state corresponding to the environment dynamic factor; and the dynamic eye-free time evaluation factor corresponding to the specific state is determined based on the pre-defined correspondence between various environment dynamic factor states and the dynamic eye-free time evaluation factor. The pre-defined states of the environment dynamic factor at least include: no environmental influence, wind, rain, snow, fog, and icing. It should be noted that the pre-defined state of the environment dynamic factor is only a preferred implementation; according to the actual application scene and different calculation capacity of the vehicle, the state of the environment dynamic factor may also be other more types of states, or other fewer types of states, for example, the pre-defined states of the environment dynamic factor include: no environmental influence, rain and snow weather, fog weather, and icing weather, or the pre-defined states of the environment dynamic factor include: no environmental influence, light rain, moderate rain, heavy rain, light snow, medium snow, heavy snow, small fog, medium fog, heavy fog and icing.

In a case that the dynamic factor is the vehicle dynamic factor, that is, the environment factor concerned in the dynamic adjustment of the static eye-free time allowance is the vehicle state, if there is any problem of the vehicle, a shorter allowable eye-free time is given to the driver, and factors to be considered include but are limited to incapability of stopping the running of AD/ADAS system, tire flat, malfunction of headlights, etc. Therefore, the present invention pre-defines various states of the vehicle dynamic factor; the received vehicle dynamic factor information is identified to determine the specific state corresponding to the vehicle dynamic facto; and the dynamic eye-free time evaluation factor corresponding to the specific state is determined based on the pre-defined correspondence between various vehicle dynamic factor states and the dynamic eye-free time evaluation factor. The pre-defined states of the vehicle dynamic factor at least include: no problem, minor problem, medium problem, and serious problem. It should be noted that the pre-defined state of the vehicle dynamic factor is only a preferred implementation; according to the actual application scene and different calculation capacity of the vehicle, the state of the vehicle dynamic factor may also be other more types of states, or other fewer types of states, for example, the pre-defined states of the vehicle dynamic factor include: no problem, problems, and serious problem, or the pre-defined states of the vehicle dynamic factor include: no problem, insufficient pressure of the vehicle tires, abnormality of a vehicle braking system, abnormality of a vehicle cooling system, and abnormality of vehicle headlights, and abnormality of the vehicle tire pressure that the pressure drop is greater than a set value within a set period, and the set period and the set value may be set according to the actual application scene, which are not specifically limited herein.

In a case that the dynamic factor is a driver dynamic factor, that is, the environment factor concerned in the dynamic adjustment of the static eye-free time allowance is the driver state, drowsiness of the driver or any injury sign may be used for adjusting the allowable eye-free time; and higher injury means shorter allowable eye-free time, and lighter injury means longer allowable eye-free time. Therefore, the present invention pre-defines various states of the driver dynamic factor; the received driver dynamic factor information is identified to determine the specific state corresponding to the driver dynamic factor; and the dynamic eye-free time evaluation factor corresponding to the specific state is determined based on the pre-defined correspondence between various driver dynamic factor states and the dynamic eye-free time evaluation factor. The pre-defined states of the driver dynamic factor at least include: alertness, low drowsiness, medium drowsiness, high drowsiness, and unconsciousness. It should be noted that the pre-defined state of the driver dynamic factor is only a preferred implementation; according to the actual application scene and different calculation capacity of the vehicle, the state of the driver dynamic factor may also be other more types of states, or other fewer types of states, for example, for example, the pre-defined states of the driver dynamic factor include: alertness, drowsiness, and unconsciousness, or the pre-defined states of the driver dynamic factor include: alertness, low drowsiness, medium drowsiness, high drowsiness, light injury, heavy injury, and unconsciousness.

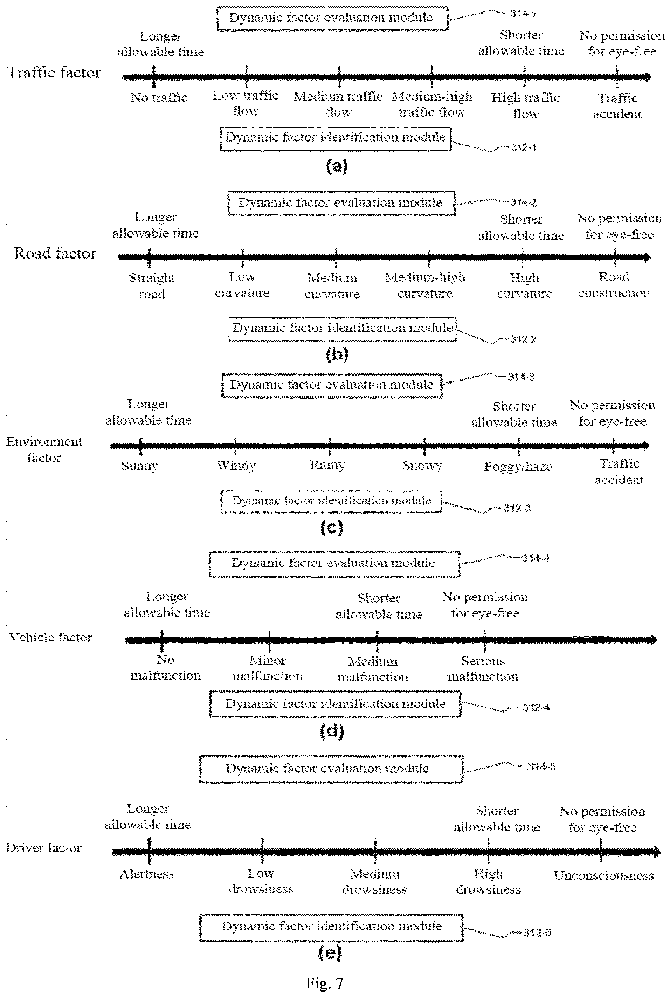

In the present embodiment, Fig. 7 shows various pre-defined states of each dynamic factor and the allowable eye-free time corresponding to each state in the present invention.

In the present embodiment, for the above-mentioned various dynamic factors, the correspondence between various pre-defined states of each dynamic factor and the dynamic eye-free time evaluation factor in the present invention is shown in the following table 2.

| Table 2 | | | | | | |
|---|---|---|---|---|---|---|
| State of traffic dynamic factors | No traffic influence | Low | Medium | High-medium | High | Traffic accident |
| Corresponding dynamic eye-free time evaluation factor (Tf) | 1 | 1 | 0.8 | 0.5 | 0.3 | 0 |

(continued)

| Table 2 | | | | | | |
|---|---|---|---|---|---|---|
| State of traffic dynamic factors | No traffic influence | Low | Medium | High-medium | High | Traffic accident |
| Supplementary description | No limitation | | | | | No permission for eyes to leave the road (No permission for eye-free) |
| State of road dynamic factors | No curvature | Low | Medium | High-medium | High | Road construction |
| Corresponding dynamic eye-free time evaluation factor (Rf) | 1 | 1 | 0.8 | 0.5 | 0.3 | 0 |
| Supplementary description | No limitation | | | | | No permission for eyes to leave the road (No permission for eye-free) |
| Environment dynamic factor | No environmental influence | Wind | Rain | Snow | Fog/ha ze | Icing |
| Corresponding dynamic eye-free time evaluation factor (Ef) | 1 | 0.8 | 0.6 | 0.4 | 0.2 | 0 |
| Supplementary description | No limitation | | | | | No permission for eyes to leave the road (No permission for eye-free) |
| Vehicle dynamic factor | No malfunction | Minor malfunction | | Medium malfunction | | Serious malfunction |
| Corresponding dynamic eye-free time evaluation factor (Vf) | 1 | 1 | | 0.5 | | 0 |
| Supplementary description | No limitation | | | | | No permission for eyes to leave the road (No permission for eye-free) |
| Driver dynamic factor | Alertness | Low drowsiness | Medium drowsiness | High drowsiness | | Unconsciousne ss |
| Corresponding dynamic eye-free time evaluation factor (Df) | 1 | 0.6 | 0.3 | 0 | | 0 |
| Supplementary description | No limitation | | | No permission for eyes to leave the road (No permission for eye-free) | | No permission for eyes to leave the road (No permission for eye-free) |

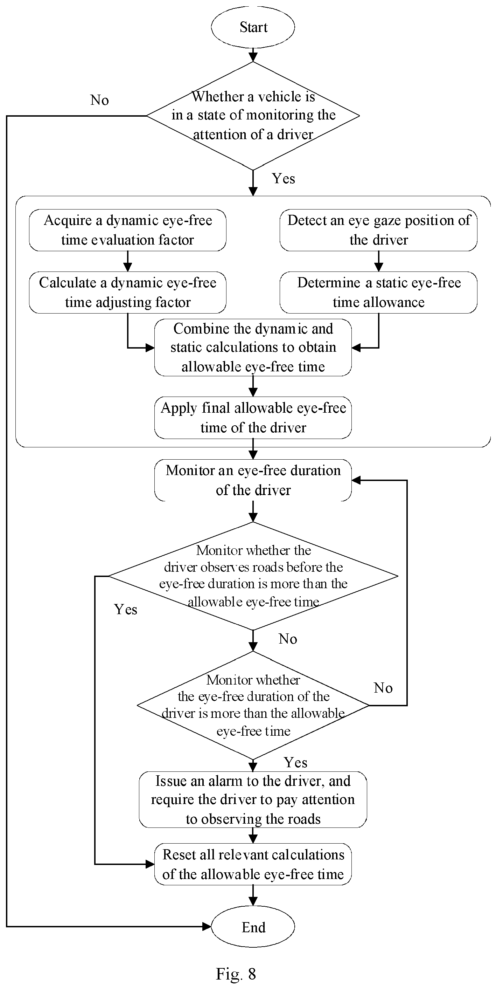

In the present embodiment, Fig. 8 shows a working flowchart of an eye-free driving assistance system provided by the present invention. As shown in Fig. 8, a process for deriving the final allowable eye-free time of the driver is shown. The process runs periodically in a controller of an automatic or semi-automatic driving vehicle. As shown in the drawing, in the process, whether the vehicle is in a state needing the attention of the driver is first determined. If the answer is "no", an execution process of the control cycle quits directly. If the answer is "yes", the eye gaze position (or the eye gaze direction) of the driver is further detected, then the corresponding static eye-free time allowance is determined based on the detected eye gaze position (or eye gaze direction) of the driver, various received dynamic eye-free time evaluation factors are processed at the same time, and the corresponding dynamic eye-free time adjusting factor is determined based on the received dynamic eye-free time evaluation factors. Then, based on the obtained static eye-free time allowance and dynamic eye-free time adjusting factor, the final allowable eye-free time is calculated. An eye-free duration of the driver is monitored in real time during the application of the obtained final allowable eye-free time of the driver, whether the driver begins to observe the road again before the eye-free duration of the driver is more than the allowable eye-free time is monitored, and if the answer is "yes", all relevant calculations of the allowable eye-free time are reset. It should be noted that in an implementation of actually periodically executing the controller, an independent thread or process may be used for continuously monitoring the running; and in the running period of the controller, the eye-free duration may also be accumulated in a way of using a static variable or a global variable without preventing the controller from periodically running other programs. If the answer is "no", whether the eye-free duration of the driver is more than the allowable eye-free time is monitored. If the answer is "no", the eye-free duration of the driver continues to be monitored. If the answer is "yes", an alarm is issued to the driver, and the driver is required to pay attention to observing the road. After the alarm is issued to the driver, all relevant calculations of the allowable eye-free time are reset, and the execution process of the control period quits.

Based on the same invention concept, an embodiment of the present invention provides an eye-free driving assistance method. The method includes:

A static eye-free time allowance corresponding to eye gaze information is determined according to the eye gaze information of a driver;

A dynamic eye-free time adjusting factor is determined according to each dynamic factor information influencing vehicle running;

Allowable eye-free time is determined according to the static eye-free time allowance and the dynamic eye-free time adjusting factor;

The allowable eye-free time is compared with the monitored eye-free time of the driver to obtain a comparison result; and

An alarm is issued to the driver according to the comparison result.

Optionally, the step in which the static eye-free time allowance corresponding to the eye gaze information is determined according to the eye gaze information of the driver includes:

The eye gaze information is parsed to determine an eye gaze state corresponding to the eye gaze information, and generate an identifiable eye gaze feature with state information of the eye gaze state; and

The static eye-free time allowance corresponding to the identifiable eye gaze feature is determined according to the identifiable eye gaze feature.

Optionally, the eye gaze state includes a specific position of the eye gaze or a specific direction of the eye gaze;

In a case that the eye gaze state in the eye gaze identification module is the specific position of the eye gaze, the state information of the eye gaze state is position information of an eye gaze position;

In a case that the eye gaze state in the eye gaze identification module is the specific direction of the eye gaze, the state information of the eye gaze state is direction information of an eye gaze direction.

Optionally, the step in which the dynamic eye-free time adjusting factor is determined according to each dynamic factor information influencing the vehicle running includes:

Each dynamic eye-free time evaluation factor corresponding to each dynamic factor information is determined according to each dynamic factor information; and

The dynamic eye-free time evaluation factors are calculated to obtain corresponding dynamic eye-free time adjusting factors.

Optionally, the step in which each dynamic eye-free time evaluation factor corresponding to each dynamic factor information is determined according to each dynamic factor information includes:

The dynamic factor information is identified to determine each dynamic factor state corresponding to each dynamic factor information;

Each dynamic eye-free time evaluation factor corresponding to each dynamic factor state is determined according to a correspondence between the dynamic factor state of each dynamic factor and the dynamic eye-free time evaluation factor and each dynamic factor state.

Optionally, each dynamic eye-free time evaluation factor is a dimensionless quantity with a lower limit of 0 and an upper limit of 1.

Optionally, each dynamic eye-free time evaluation factor is a time-dimension quantity with a lower limit of a negative number and an upper limit of a positive number.

Optionally, the step in which the allowable eye-free time is determined according to the static eye-free time allowance and the dynamic eye-free time adjusting factor in a case that each dynamic eye-free time evaluation factor is the dimensionless quantity includes: the static eye-free time allowance is multiplied with the dynamic eye-free time adjusting factor to obtain the allowable eye-free time.

Optionally, the step in which the allowable eye-free time is determined according to the static eye-free time allowance and the dynamic eye-free time adjusting factor in a case that each dynamic eye-free time evaluation factor is the time-dimension quantity includes: the static eye-free time allowance and the dynamic eye-free time adjusting factor are calculated based on a preset algorithm to obtain the allowable eye-free time.

Optionally, the dynamic factors at least include a traffic dynamic factor, a road dynamic factor, an environment dynamic factor, a vehicle dynamic factor, and a driver dynamic factor;

States of the traffic dynamic factor at least include: no traffic, low flow, medium flow, high-medium flow, high flow, and traffic accident;

States of the road dynamic factor at least include: no curvature, low curvature, medium curvature, high-medium curvature. high curvature, and road construction;

States of the environment dynamic factor at least include: no environmental influence, wind, rain, snow, fog, and icing;

States of the vehicle dynamic factor at least include: no problem, minor problem, medium problem, and serious problem; and

States of the driver dynamic factor at least include: alertness, low drowsiness, medium drowsiness, high drowsiness, and unconsciousness.

Based on the same invention concept, an embodiment of the present invention provides an electronic device, which includes a memory, a processor, and a computer program stored on the memory and capable of being run on the processor, where the computer program, when executed by the processor, implements the eye-free driving assistance method according to the second aspect of the present invention.

Based on the same invention concept, an embodiment of the present invention provides a computer readable storage medium, where the computer readable storage medium stores a computer program, and the computer program, when executed by a processor, implements the eye-free driving assistance method according to the second aspect of the present invention.

Basically similar to the system embodiment, the method embodiment is simply described, and relevant points may be in reference to some description of the system embodiment.

It should be noted that for simple description, the foregoing method embodiments are all expressed as a series of action combinations, but those skilled in the art should know that the embodiments of the present invention are not limited by the described order of actions, because according to the embodiments of the present invention, some steps may be performed in other sequences or simultaneously. Secondly, those skilled in the art should also know that the embodiments described in the specification are all preferred embodiments, and the involved actions are not necessary for the embodiments of present invention.

Each embodiment of the present invention is described in a progressive manner, each embodiment focuses on the difference from other embodiments, and the same and similar parts between the embodiments may refer to each other.

It should be understood by those skilled in the art that the embodiments of the present invention can be provided as a method, a system, or a computer program product. Therefore, the embodiments of the present invention can take the form of an entirely hardware embodiment, an entirely software embodiment, or an embodiment combining software and hardware aspects. Furthermore, the embodiments of the present invention can take the form of a computer program product implemented on one or more computer usable storage media (including but not limited to disk memory, CD-ROM, optical memory, etc.) having computer usable program codes embodied therein.

The embodiments of the present invention have been described herein with reference to the flowchart and/or the block diagrams of the method, terminal device (systems), and computer program products according to the embodiments of the present invention. It should be noted that each flow and/or block in the flowchart and/or the block diagram, and a combination of the flow and/or block in the flowchart and/or the block diagram may be implemented by a computer program instruction. These computer program instructions may be provided to a processor of a general purpose computer, a dedicated computer, an embedded processing machine or other programmable data processing devices, to produce a machine, such that the instructions executed by the processor of the computer or other programmable data processing terminal device create an apparatus for implementing the functions specified in one or more flows of the flowchart and/or one or more blocks of the block diagram.

These computer program instructions may also be stored in a computer readable memory capable of instructing the computer or other programmable data processing terminal device to work in a specified manner, so that the instructions stored in the computer readable memory create a product including the instruction apparatus, and the instruction apparatus implements the functions specified in one or more flows of the flowchart or in one or more blocks of the block diagram.

These computer program instructions can also be loaded on the computer or other programmable data processing terminal device, so that a series of operation steps are performed on the computer or other programmable terminal device to produce computer-implemented processes, and subsequently, the instructions executed on the computer or other programmable terminal device provide steps for implementing the functions specified in one or more flows of the flowchart and/or in one or more blocks of the block diagram.

Although the preferred embodiments of the present invention have been described, those skilled in the art can make additional changes and modifications to these embodiments once they know the basic inventive concepts. Therefore, the appended claims are intended to be interpreted as including the preferred embodiments and all changes and modifications falling within the scope of the embodiments of the present invention.

Finally, it also should be noted that relational terms used herein such as first and second etc. are only used to distinguish one entity or operation from another entity or operation, and do not necessarily require or imply any such actual relation or sequence between these entities or operations. Moreover, terms "include", "contain" or any other variations thereof are intended to cover a non-exclusive inclusion, so that a process, method, article, or terminals including a series of elements does not include only those elements but also other elements not expressly listed or also includes the intrinsic elements of the process, method, article, or terminals. Without further limitations, an element defined by the sentence "including an" do not exclude the presence of other same elements in the process, method, article or terminal device including the element.

The eye-free driving assistance system and method, the electronic device, and the storage medium provided by the present invention are described in detail above. The principle and embodiments of the present invention are described herein with specific examples. The above embodiments are explained to help the understanding of the method and core concept of the present invention. Meanwhile, for the ordinary skilled in the art, according to the concept of the present invention, the embodiments and application ranges may be changed. In conclusion, the contents of the present description should not be construed as limiting the present inventior The scope is defined by the claims.

## Claims

1. An eye-free driving assistance system (200), comprising:

   a static eye-free time module (400), configured to determine static eye-free time allowance (425) corresponding to eye gaze information (112) according to the eye gaze of a driver;
   a dynamic eye-free factor processing module (300), configured to determine a dynamic eye-free time adjusting factor (325) according to each dynamic factor information (122) influencing the vehicle running;
   an eye-free time adjusting module (450), configured to determine allowable eye-free time (250) according to the static eye-free time allowance (425) and the dynamic eye-free time adjusting factor (325); and
   an eye-free time monitor (155) in an automatic driving HMI system (150), configured to receive the allowable eye-free time (250) and monitor the eye-free time of the driver, compare the allowable eye-free time (250) with the eye-free time to obtain a comparison result, and issue an alarm to a driver warning system (130) according to the comparison result.

2. The eye-free driving assistance system (200) according to claim 1, wherein a system cooperating with the eye-free driving assistance system (200) comprises:

a driver monitor system (DMS) (110), configured to acquire the eye gaze information (112) of the driver;
a sensor system (140), the sensor system (140) comprising a plurality of sensors for sensing each dynamic factor information (122); and
an automatic driving HMI system (150), a dynamic eye-free factor collection module (120) in the automatic driving HMI system (150) being configured to receive each sensed dynamic factor information (122).

3. The eye-free driving assistance system (200) according to claim 1, wherein the static eye-free time module (400) comprises:

an eye gaze identification module (410), configured to parse the eye gaze information (112) to determine an eye gaze state corresponding to the eye gaze information (112), and generate an identifiable eye gaze feature (415) with state information of the eye gaze state; and
a static eye-free time evaluation module (420), configured to determine static eye-free time allowance (425) corresponding to the identifiable eye gaze feature (415) according to the identifiable eye gaze feature (415).

4. The eye-free driving assistance system (200) according to claim 3, wherein the eye gaze state in the eye gaze identification module (410) comprises a specific position of the eye gaze or a specific position of the eye gaze;

in a case that the eye gaze state in the eye gaze identification module (410) is the specific position of the eye gaze, the state information of the eye gaze state is the position information of an eye gaze position;
in a case that the eye gaze state in the eye gaze identification module (410) is the specific direction of the eye gaze, the state information of the eye gaze state is the direction information of an eye gaze direction.

5. The eye-free driving assistance system (200) according to claim 4, wherein the dynamic eye-free factor processing module (300) comprises:

a dynamic eye-free factor analysis module (310), configured to determine each dynamic eye-free time evaluation factor (316) corresponding to each dynamic factor information (122) according to each dynamic factor information (122); and
a dynamic eye-free factor integration module (320), configured to calculate each dynamic eye-free time evaluation factor (316) to obtain a corresponding dynamic eye-free time adjusting factor (325).

6. The eye-free driving assistance system (200) according to claim 5, wherein the dynamic eye-free factor analysis module (310) comprises:

a dynamic factor identification module (312), configured to identify each dynamic factor information (122) to determine each dynamic factor state corresponding to each dynamic factor information (122); and
a dynamic factor evaluation module (314), configured to determine each dynamic eye-free time evaluation factor (316) corresponding to each dynamic factor state according to a correspondence between the dynamic factor state of each dynamic factor and the dynamic eye-free time evaluation factor (316) and each dynamic factor state.

7. The eye-free driving assistance system (200) according to claim 6, wherein each dynamic eye-free time evaluation factor (316) in the dynamic factor evaluation module (314) is a dimensionless quantity with a lower limit of 0 and an upper limit of 1.

8. The eye-free driving assistance system (200) according to claim 6, wherein each dynamic eye-free time evaluation factor (316) in the dynamic factor evaluation module (314) is a time-dimension quantity with a lower limit of a negative number and an upper limit of a positive number.

9. The eye-free driving assistance system (200) according to claim 7, wherein in a case that each dynamic eye-free time evaluation factor (316) is the dimensionless quantity, the eye-free time adjusting module (450) is configured to multiply the static eye-free time allowance (425) with the dynamic eye-free time adjusting factor (325) to obtain the allowable eye-free time (250).

10. The eye-free driving assistance system (200) according to claim 8, wherein in a case that each dynamic eye-free time evaluation factor (316) is the time-dimension quantity, the eye-free time adjusting module (450) is configured to calculate the static eye-free time allowance (425) and the dynamic eye-free time adjusting factor (325) based on a preset algorithm to obtain the allowable eye-free time (250).

11. The eye-free driving assistance system (200) according to claim 6, wherein each dynamic factor in the dynamic eye-free factor processing module (300) at least comprises a traffic dynamic factor, a road dynamic factor, an environment dynamic factor, a vehicle dynamic factor, and a driver dynamic factor;

the states of the traffic dynamic factor at least comprise no traffic, low flow, medium flow, high-medium flow, high flow, and traffic accident;
the states of the road dynamic factor at least comprise: no curvature, low curvature, medium curvature, medium-high curvature, high curvature, and road construction;
the states of the environment dynamic factor at least comprise: no environmental influence, wind, rain, snow, fog, and icing;
the states of the vehicle dynamic factor at least comprise: no problem, minor problem, medium problem and serious problem; and
the states of the driver dynamic factor at least comprise: alertness, low drowsiness, medium drowsiness, high drowsiness, and unconsciousness.

12. An eye-free driving assistance method, comprising:

determining static eye-free time allowance (425) corresponding to eye gaze information (112) according to the eye gaze of a driver;
determining a dynamic eye-free time adjusting factor (325) according to each dynamic factor information (122) influencing vehicle running;
determining allowable eye-free time (250) according to the static eye-free time allowance (425) and the dynamic eye-free time adjusting factor (325);
comparing the allowable eye-free time (250) with the monitored eye-free time of the driver to obtain a comparison result; and
issuing an alarm to the driver according to the comparison result.

13. A vehicle (100), comprising an eye-free driving assistance system (200) according to claim 1.

14. A computer readable storage medium, having a computer program stored thereon, wherein the computer program, when executed by a processor, implements the eye-free driving assistance method according to claim 12.

**Patentansprüche**

1. Augenfreies Fahrassistenzsystem (200), umfassend:

ein statisches augenfreies Zeitmodul (400), das so konfiguriert ist, dass es eine statische augenfreie Zeitzulage (425) entsprechend den Blickrichtungsinformationen (112) gemäß der Blickrichtung eines Fahrers bestimmt;
ein dynamisches Modul zur Verarbeitung des augenfreien Faktors (300), das so konfiguriert ist, dass es einen dynamischen Anpassungsfaktor für die augenfreie Zeit (325) gemäß jeder dynamischen Faktorinformation (122) bestimmt, die den Fahrzeugbetrieb beeinflusst;
ein Modul zur Anpassung der augenfreien Zeit (450), das so konfiguriert ist, dass es die zulässige augenfreie Zeit (250) gemäß der statischen augenfreien Zeitzulage (425) und dem dynamischen Anpassungsfaktor für die augenfreie Zeit (325) bestimmt; und
eine Überwachung der augenfreien Zeit (155) in einem HMI-System für automatisches Fahren (150), die so konfiguriert ist, dass sie die zulässige augenfreie Zeit (250) empfängt und die augenfreie Zeit des Fahrers überwacht, die zulässige augenfreie Zeit (250) mit der augenfreie Zeit vergleicht, um ein Vergleichsergebnis zu erhalten, und entsprechend dem Vergleichsergebnis einen Alarm an ein Fahrer-Warnsystem (130) ausgibt.

2. Augenfreies Fahrassistenzsystem (200) nach Anspruch 1, wobei ein mit dem augenfreien Fahrassistenzsystem (200) zusammenarbeitendes System umfasst:

ein Fahrerüberwachungssystem (DMS) (110), das so konfiguriert ist, dass es die Blickrichtungsinformationen (112) des Fahrers erfasst;
ein Sensorsystem (140), wobei das Sensorsystem (140) eine Mehrzahl von Sensoren zum Erfassen jeder dynamischen Faktorinformation (122) umfasst; und
ein HMI-System für automatisches Fahren (150), wobei ein dynamisches Modul zum Sammeln von augenfreien Faktoren (120) im HMI-System für automatisches Fahren (150) so konfiguriert ist, dass es jede erfasste dynamische Faktorinformation (122) empfängt

3. Augenfreies Fahrassistenzsystem (200) nach Anspruch 1, wobei das statische augenfreie Zeitmodul (400) umfasst:

ein Blickrichtungsidentifizierungsmodul (410), das so konfiguriert ist, dass es die Blickrichtungsinformationen (112) analysiert, um einen Blickrichtungszustand zu bestimmen, der den Blickrichtungsinformationen (112) entspricht, und ein identifizierbares Blickrichtungsmerkmal (415) mit Zustandsinformationen des Blickrichtungszustands zu erzeugen; und
ein statisches zur Bewertung der augenfreien Zeit (420), das so konfiguriert ist, dass es eine statische augenfreie Zeitzulage (425) entsprechend dem identifizierbaren Blickrichtungsmerkmal (415) gemäß dem identifizierbaren Blickrichtungsmerkmal (415) bestimmt.

4. Augenfreies Fahrassistenzsystem (200) nach Anspruch 3, wobei der Blickrichtungszustand im Blickrichtungsidentifizierungsmodul (410) eine bestimmte Position der Blickrichtung oder eine bestimmte Position der Blickrichtung umfasst;

in einem Fall, in dem der Blickrichtungszustand im Blickrichtungsidentifizierungsmodul (410) die spezifische Position der Blickrichtung ist, die Zustandsinformation des Blickrichtungszustands die Positionsinformation einer Blickrichtungsposition ist;
in einem Fall, in dem der Blickrichtungszustand im Blickrichtungsidentifizierungsmodul (410) die spezifische Richtung der Blickrichtung ist, die Zustandsinformation des Blickrichtungszustands die Richtungsinformation einer Blickrichtung ist.

5. Augenfreies Fahrassistenzsystem (200) nach Anspruch 4, wobei das dynamische Modul zur Verarbeitung des augenfreien Faktors (300) umfasst:

ein dynamisches Modul zur Analyse des augenfreien Faktors (310), das so konfiguriert ist, dass es jeden dynamischen augenfreien Zeitbewertungsfaktor (316) entsprechend jeder dynamischen Faktorinformation (122) gemäß jeder dynamischen Faktorinformation (122) bestimmt; und
ein dynamisches Modul zur Integration des augenfreien Faktors (320), das so konfiguriert ist, dass es jeden dynamischen augenfreien Zeitbewertungsfaktor (316) berechnet, um einen entsprechenden dynamischen Anpassungsfaktor für die augenfreie Zeit (325) zu erhalten.

6. Augenfreies Fahrassistenzsystem (200) nach Anspruch 5, wobei das dynamische Modul zur Analyse des augenfreien Faktors (310) umfasst:

ein Modul zur Identifizierung dynamischer Faktoren (312), das so konfiguriert ist, dass es jede dynamische Faktorinformation (122) identifiziert, um jeden dynamischen Faktorzustand zu bestimmen, der jeder dynamischen Faktorinformation (122) entspricht; und
ein dynamisches Faktorbewertungsmodul (314), das so konfiguriert ist, dass es jeden dynamischen augenfreien Zeitauswertungsfaktor (316) entsprechend jedem dynamischen Faktorzustand gemäß einer Entsprechung zwischen dem dynamischen Faktorzustand jedes dynamischen Faktors und dem dynamischen augenfreien Zeitbewertungsfaktor (316) und jedem dynamischen Faktorzustand bestimmt.

7. Augenfreies Fahrassistenzsystem (200) nach Anspruch 6, wobei jeder dynamische augenfreie Zeitbewertungsfaktor (316) im dynamischen Faktorbewertungsmodul (314) eine dimensionslose Größe mit einer Untergrenze von 0 und einer Obergrenze von 1 ist.

8. Augenfreies Fahrassistenzsystem (200) nach Anspruch 6, wobei jeder dynamische augenfreie Zeitbewertungsfaktor (316) im dynamischen Faktorbewertungsmodul (314) eine zeitdimensionale Größe mit einer Untergrenze einer negativen Zahl und einer Obergrenze einer positiven Zahl ist.

9. Augenfreies Fahrassistenzsystem (200) nach Anspruch 7, wobei in einem Fall, in dem jeder dynamische augenfreie Zeitbewertungsfaktor (316) die dimensionslose Größe ist, das Modul zur Anpassung der augenfreien Zeit (450) so konfiguriert ist, dass es die statische augenfreie Zeitzulage (425) mit dem dynamischen Anpassungsfaktor für die augenfreie Zeit (325) multipliziert, um die zulässige augenfreie Zeit (250) zu erhalten.

10. Augenfreies Fahrassistenzsystem (200) nach Anspruch 8, wobei in einem Fall, in dem jeder dynamische augenfreie Zeitbewertungsfaktor (316) die zeitdimensionale Größe ist, das Modul zur Anpassung der augenfreien Zeit (450) so konfiguriert ist, dass es die statische augenfreie Zeitzulage (425) und den dynamischen Anpassungsfaktor für die augenfreie Zeit (325) auf der Grundlage eines voreingestellten Algorithmus berechnet, um die zulässige augenfreie Zeit (250) zu erhalten.

11. Augenfreies Fahrassistenzsystem (200) nach Anspruch 6, wobei jeder dynamische Faktor im dynamischen Modul zur Verarbeitung des augenfreien Faktors (300) mindestens einen Verkehrsdynamikfaktor, einen Straßendynamikfaktor, einen Umgebungsdynamikfaktor, einen Fahrzeugdynamikfaktor und einen Fahrerdynamikfaktor umfasst;

   die Zustände des Verkehrsdynamikfaktors mindestens keinen Verkehr, geringen Verkehrsfluss, mittleren Verkehrsfluss, hohen mittleren Verkehrsfluss, hohen Verkehrsfluss und Verkehrsunfall umfassen;
   die Zustände des Straßendynamikfaktors mindestens keine Kurve, geringe Kurve, mittlere Kurve, mittelhohe Kurve, hohe Kurve und Straßenbau umfassen;
   die Zustände des dynamischen Umweltfaktors umfassen mindestens: keinen Umwelteinfluss, Wind, Regen, Schnee, Nebel und Vereisung; die Zustände des dynamischen Fahrzeugfaktors umfassen mindestens: kein Problem, geringfügiges Problem, mittleres Problem und schwerwiegendes Problem; und
   die Zustände des dynamischen Fahrerfaktors umfassen mindestens: Wachsamkeit, geringe Schläfrigkeit, mittlere Schläfrigkeit, hohe Schläfrigkeit und Bewusstlosigkeit.

12. Verfahren zur Unterstützung des augenfreien Fahrens, umfassend:

   Bestimmen einer statischen augenfreien Zeitzulage (425) entsprechend den Blickrichtungsinformationen (112) gemäß der Blickrichtung eines Fahrers;
   Bestimmen eines dynamischen Anpassungsfaktor für die augenfreie Zeit (325) gemäß jeder dynamischen Faktorinformation (122), die den Fahrzeugbetrieb beeinflusst;
   Bestimmen einer zulässigen augenfreien Zeit (250) gemäß der statischen augenfreien Zeitzulage (425) und dem dynamischen Anpassungsfaktor für die augenfreie Zeit (325);
   Vergleichen der zulässigen augenfreien Zeit (250) mit der überwachten augenfreien Zeit des Fahrers, um ein Vergleichsergebnis zu erhalten; und
   Ausgeben eines Alarms an den Fahrer entsprechend dem Vergleichsergebnis.

13. Fahrzeug (100), das ein augenfreies Fahrassistenzsystem (200) nach Anspruch 1 umfasst.

14. Computerlesbares Speichermedium, auf dem ein Computerprogramm gespeichert ist, wobei das Computerprogramm, wenn es von einem Prozessor ausgeführt wird, das augenfreie Fahrassistenzverfahren nach Anspruch 12 implementiert.

**Revendications**

1. Système d'assistance à la conduite en cas de regard détourné (200), comprenant :

   un module de temps de regard détourné statique (400), configuré pour déterminer un temps de regard détourné statique autorisé (425) correspondant à des informations de regard (112) selon le regard d'un conducteur ;
   un module de traitement de facteur de regard détourné dynamique (300), configuré pour déterminer un facteur d'ajustement du temps de regard détourné dynamique (325) selon chaque information de facteur dynamique (122) influençant la conduite du véhicule ;
   un module d'ajustement du temps de regard détourné (450), configuré pour déterminer un temps de regard détourné autorisé (250) selon le temps de regard détourné statique autorisé (425) et le facteur d'ajustement du temps de regard détourné dynamique (325) ; et

un dispositif de surveillance du temps de regard détourné (155) dans un système d'interface homme-machine de conduite automatique (150), configuré pour recevoir le temps de regard détourné autorisé (250) et surveiller le temps de regard détourné du conducteur, comparer le temps de regard détourné autorisé (250) avec le temps de regard détourné pour obtenir un résultat de comparaison, et déclencher une alarme vers un système d'alerte du conducteur (130) selon le résultat de comparaison.

2. Système d'assistance à la conduite en cas de regard détourné (200) selon la revendication 1, dans lequel un système coopérant avec le système d'assistance à la conduite en cas de regard détourné (200) comprend :

un système de surveillance du conducteur (DMS) (110), configuré pour acquérir les informations de regard (112) du conducteur ;
un système de capteurs (140), le système de capteurs (140) comprenant une pluralité de capteurs pour détecter chaque information de facteur dynamique (122) ; et
un système d'interface homme-machine de conduite automatique (150), un module de collecte de facteur de regard détourné dynamique (120) dans le système d'interface homme-machine de conduite automatique (150) étant configuré pour recevoir chaque information de facteur dynamique (122) détectée.

3. Système d'assistance à la conduite en cas de regard détourné (200) selon la revendication 1, dans lequel le module de temps de regard détourné statique (400) comprend :

un module d'identification de regard détourné (410), configuré pour analyser les informations de regard (112) afin de déterminer un état de regard correspondant aux informations de regard (112), et générer une caractéristique de regard identifiable (415) avec des informations d'état du regard ; et
un module d'évaluation du temps de regard détourné statique (420), configuré pour déterminer le temps de regard détourné statique autorisé (425) correspondant à la caractéristique de regard identifiable (415) selon la caractéristique de regard identifiable (415).

4. Système d'assistance à la conduite en cas de regard détourné (200) selon la revendication 3, dans lequel l'état de regard dans le module d'identification du regard (410) comprend une position spécifique du regard ou une position spécifique du regard ;

dans le cas où l'état de regard dans le module d'identification du regard (410) est la position spécifique du regard, les informations d'état du regard sont les informations de position d'une position du regard ;
dans le cas où l'état de regard dans le module d'identification du regard (410) est la direction spécifique du regard, les informations d'état du regard sont les informations de direction d'une direction du regard.

5. Système d'assistance à la conduite en cas de regard détourné (200) selon la revendication 4, dans lequel le module de traitement de facteur dynamique de regard détourné (300) comprend :

un module d'analyse de facteur de regard détourné dynamique (310), configuré pour déterminer chaque facteur d'évaluation du temps de regard détourné dynamique (316) correspondant à chaque information de facteur dynamique (122) selon chaque information de facteur dynamique (122) ; et
un module d'intégration de facteur de regard détourné dynamique (320), configuré pour calculer chaque facteur d'évaluation du temps de regard détourné dynamique (316) afin d'obtenir un facteur d'ajustement du temps de regard détourné dynamique correspondant (325).

6. Système d'assistance à la conduite en cas de regard détourné (200) selon la revendication 5, dans lequel le module d'analyse de facteur de regard détourné dynamique (310) comprend :

un module d'identification de facteur dynamique (312), configuré pour identifier chaque information de facteur dynamique (122) afin de déterminer chaque état de facteur dynamique correspondant à chaque information de facteur dynamique (122) ; et
un module d'évaluation de facteur dynamique (314), configuré pour déterminer chaque facteur d'évaluation du temps de regard détourné dynamique (316) correspondant à chaque état de facteur dynamique selon une correspondance entre l'état de facteur dynamique de chaque facteur dynamique et le facteur d'évaluation du temps de regard détourné dynamique (316) et chaque état de facteur dynamique.

7. Système d'assistance à la conduite en cas de regard détourné (200) selon la revendication 6, dans lequel chaque facteur d'évaluation du temps de regard détourné dynamique (316) dans le module d'évaluation de facteur dynamique (314) est une grandeur sans dimension ayant une limite inférieure de 0 et une limite supérieure de 1.

8. Système d'assistance à la conduite en cas de regard détourné (200) selon la revendication 6, dans lequel chaque facteur d'évaluation du temps de regard détourné dynamique (316) dans le module d'évaluation de facteur dynamique (314) est une grandeur à dimension temporelle ayant une limite inférieure correspondant à un nombre négatif et une limite supérieure correspondant à un nombre positif.

9. Système d'assistance à la conduite en cas de regard détourné (200) selon la revendication 7, dans lequel, dans le cas où chaque facteur d'évaluation du temps de regard détourné dynamique (316) est une grandeur sans dimension, le module d'ajustement du temps de regard détourné (450) est configuré pour multiplier le temps de regard détourné statique autorisé (425) par le facteur d'ajustement du temps de regard détourné dynamique (325) afin d'obtenir le temps de regard détourné autorisé (250).

10. Système d'assistance à la conduite en cas de regard détourné (200) selon la revendication 8, dans lequel, dans un cas où chaque facteur d'évaluation du temps de regard détourné dynamique (316) est une grandeur à dimension temporelle, le module d'ajustement du temps de regard détourné (450) est configuré pour calculer le temps de regard détourné statique autorisé (425) et le facteur d'ajustement du temps de regard détourné dynamique (325) sur la base d'un algorithme prédéfini afin d'obtenir le temps de regard détourné autorisé (250).

11. Système d'assistance à la conduite en cas de regard détourné (200) selon la revendication 6, dans lequel chaque facteur dynamique dans le module de traitement de facteur de regard détourné dynamique (300) comprend au moins un facteur dynamique de circulation, un facteur dynamique de route, un facteur dynamique d'environnement, un facteur dynamique de véhicule et un facteur dynamique de conducteur ;

les états du facteur dynamique de circulation comprennent au moins : absence de circulation, faible flux, flux moyen, flux moyen-élevé, flux élevé et accident de circulation ;
les états du facteur dynamique de route comprennent au moins : absence de courbure, faible courbure, courbure moyenne, courbure moyenne-élevée, courbure élevée et travaux routiers ;
les états du facteur dynamique d'environnement comprennent au moins : absence d'influence environnementale, vent, pluie, neige, brouillard et verglas ;
les états du facteur dynamique de véhicule comprennent au moins : absence de problème, problème mineur, problème moyen et problème grave ; et
les états du facteur dynamique de conducteur comprennent au moins : vigilance, somnolence faible, somnolence moyenne, somnolence élevée et perte de conscience.

12. Procédé d'assistance à la conduite en cas de regard détourné, comprenant :

déterminer un temps de regard détourné statique autorisé (425) correspondant à des informations de regard (112) selon le regard d'un conducteur ;
déterminer un facteur d'ajustement du temps de regard détourné dynamique (325) selon chaque information de facteur dynamique (122) influençant la conduite du véhicule ;
déterminer un temps de regard détourné autorisé (250) selon le temps de regard détourné statique autorisé (425) et le facteur d'ajustement du temps de regard détourné dynamique (325) ;
comparer le temps de regard détourné autorisé (250) avec le temps de regard détourné surveillé du conducteur afin d'obtenir un résultat de comparaison ; et
déclencher une alarme au conducteur selon le résultat de comparaison.

13. Véhicule (100), comprenant un système d'assistance à la conduite en cas de regard détourné (200) selon la revendication 1.

14. Support de stockage lisible par ordinateur, sur lequel est enregistré un programme informatique, dans lequel le programme informatique, lorsqu'il est exécuté par un processeur, met en œuvre le procédé d'assistance à la conduite en cas de regard détourné selon la revendication 12.

Fig. 1

Fig. 2

Fig. 3

Fig. 4

Static eye-free time evaluation module — 420'

Eye gaze identification module — 410'

Fig. 5

Fig. 6

Dynamic factor evaluation module ———314-1

Longer
allowable time

Shorter
allowable time

No permission
for eye-free

**Traffic factor**

No traffic    Low traffic    Medium traffic    Medium-high    High traffic    Traffic
              flow           flow              traffic flow   flow            accident

Dynamic factor identification module ———312-1

**(a)**

Dynamic factor evaluation module ———314-2

Longer
allowable time

Shorter
allowable time

No permission
for eye-free

**Road factor**

Straight    Low          Medium       Medium-high    High         Road
road        curvature    curvature    curvature      curvature    construction

Dynamic factor identification module ———312-2

**(b)**

Dynamic factor evaluation module ———314-3

Longer
allowable time

Shorter
allowable time

No permission
for eye-free

**Environment
factor**

Sunny    Windy    Rainy    Snowy    Foggy/haze    Traffic
                                                  accident

Dynamic factor identification module ———312-3

**(c)**

Dynamic factor evaluation module ———314-4

Longer
allowable time

Shorter
allowable time

No permission
for eye-free

**Vehicle factor**

No            Minor         Medium        Serious
malfunction   malfunction   malfunction   malfunction

Dynamic factor identification module ———312-4

**(d)**

Dynamic factor evaluation module ———314-5

Longer
allowable time

Shorter
allowable time

No permission
for eye-free

**Driver factor**

Alertness    Low          Medium       High         Unconsciousness
             drowsiness   drowsiness   drowsiness

Dynamic factor identification module ———312-5

**(e)**

Fig. 7

Fig. 8

**EP 4 497 646 B1**

**Patent documents cited in the description**

- US 20210039678 A1

- DE 102014220759 A